(19) Europäisches Patentamt
European Patent Office
Office européen des brevets

(11) EP 4 722 423 A1

(12) **EUROPEAN PATENT APPLICATION**

(43) Date of publication:
**08.04.2026 Bulletin 2026/15**

(21) Application number: **25206641.0**

(22) Date of filing: **03.10.2025**

(51) International Patent Classification (IPC):
***C25D 9/08*** *(2006.01)*

(52) Cooperative Patent Classification (CPC):
**C25D 9/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.10.2024 EP 24204737**

(71) Applicants:
- **Imec VZW**
  **3001 Leuven (BE)**
- **Katholieke Universiteit Leuven**
  **3000 Leuven (BE)**

(72) Inventors:
- **SALEH, Ali Amir**
  **3000 Leuven (BE)**
- **VEREECKEN, Philippe**
  **3321 Hoegaarden (BE)**
- **VANHEUSDEN, Genis**
  **3670 Meeuwen (BE)**
- **DE TAEYE, Louis**
  **2800 Mechelen (BE)**

(74) Representative: **Winger**
**Mouterij 16 bus 101**
**3190 Boortmeerbeek (BE)**

(54) **ELECTROCHEMICAL DEPOSITION OF METAL PHOSPHATE**

(57) In a first aspect, the present invention relates to a method for depositing a layer of metal phosphate (20), comprising: a) providing a working electrode (10) in contact with a solution (30) comprising metal cations and phosphate anions; and b) electrochemically forming the layer of metal phosphate (20) onto the working electrode (10); wherein the layer of metal phosphate (20) comprises a plurality of dome-shaped substructures (21) and the solution (30) further comprises an agent which promotes said dome-shaped substructures (21) being formed such that an average size thereof is reduced.

**FIG 4**

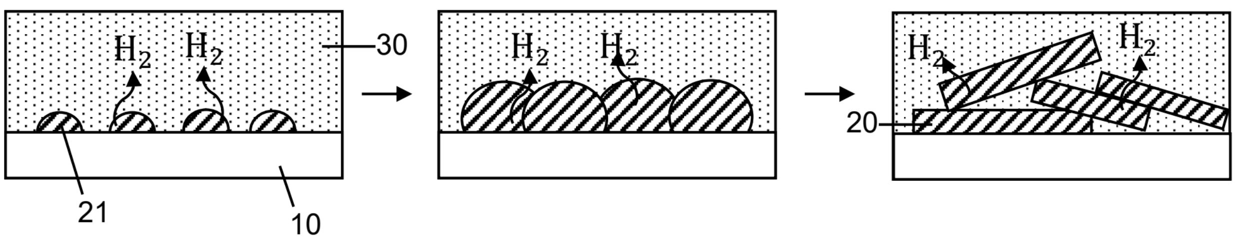


EP 4 722 423 A1

## Description

### Technical field of the invention

The present invention relates to the field of electrochemical deposition of metal phosphate, and more specifically to the deposition of a uniform layer of said metal phosphate.

### Background of the invention

Coating substrates with metal phosphates such as calcium phosphates is of particular interest for biocompatible materials, like hydroxyapatite and β-tricalcium phosphate. Metal phosphates (e.g. lithium phosphates) also play a role in advanced battery architectures-such as all-solid-state batteries-where they can for instance be used as solid electrolytes, and/or as protective coating (interface layer) to increase stability of the cathode and/or anode with respect to the electrolyte in lithium-ion batteries. In these applications, the layer morphology typically plays a crucial role in the suitability of the layer of metal phosphate for the desired purpose. For example, for many applications the layer of metal phosphate has to be dense and pin-hole free to adequately perform its intended function. Moreover, especially for structured substrates (e.g. substrates where the surface to be coated is not flat but three-dimensional), the layer of metal phosphate should preferably be conformal.

Metal phosphates can be prepared by a multitude of synthesis techniques, including electrochemical deposition, such as electrochemically induced precipitation. Electrochemical deposition can provide conformal coatings, but these coatings are typically porous. Despite the large amount of research into the electrochemical deposition of calcium phosphates, there has been very little research on electrochemical deposition of lithium phosphates. It can moreover be noted that-while for many metal phosphates the solubility product $K_{sp}$ is in the order of $10^{-20}$ or lower (e.g. $2.07\times10^{-29}$ for $Ca_3(PO_4)_2$)-for $Li_3PO_4$ it is as high as $2.37\times10^{-11}$. Hence, $Li_3PO_4$ precipitates less readily than other metal phosphates.

Liu et al. (LIU, H. C.; YEN, S. K. Electrolytic Li3PO4 coating on Pt. Journal of power sources, 2006, 159.1: 245-248.) disclosed carrying out electrolytic deposition of $Li_3PO_4$ on Pt plates in an aerated mixture of 0.5 M $LiNO_3$ and 0.02 M $NH_4H_2PO_4$ mixed aqueous solution at room temperature and carried out by potentiostatic method at -1.0 V (Ag/AgCl) for 1000 s. However, the so-obtained layer is very granular and contains lots of pinholes (see Fig. 4(b) therein); which makes it ineffective as i.a. a solid electrolyte or a protective coating.

López et al. (LOPEZ, Maria C., et al. Improving the performance of titania nanotube battery materials by surface modification with lithium phosphate. ACS Applied Materials & Interfaces, 2014, 6.8: 5669-5678.) disclosed the deposition of electrolytic $Li_3PO_4$ on Ti foils, amorphous $nTiO_2$ and crystalline NtTiOz. The deposition bath consisted of 0.5 M $LiNO_3$ and 0.02 M $NH_4H_2PO_4$ mixed in aqueous solution. Electrolytic $Li_3PO_4$ films were deposited by an electrochemical procedure consisting in proton reduction with subsequent local increase of pH in the vicinity of the substrate surface, hydrogen phosphate dissociation and $Li_3PO_4$ deposition on the surface of the cathode. The electrodeposition was carried out at room temperature (RT), using a potentiodynamic method with -1 V potential. Additionally, the galvanostatic method was extensively employed using current densities in the 3.75-75 mA $cm^{-2}$ (vs. Ag/AgCl) range and deposition times from 1 to 40 min. Using the method by López et al., a dense layer of $Li_3PO_4$ could be coated, but it exhibits clear signs of delamination (see Figure S.I.5.(a) in the Supporting Information) and/or cracks (see Figure S.I.5.(d)). These are also traits that are undesired for i.a. a solid electrolyte or a protective coating.

There is thus still a need in the art for electrochemical deposition of metal phosphates-particularly lithium phosphate, but also others-which address at least some of the issues outlined above.

### Summary of the invention

It is an object of the present invention to provide good ways for forming a layer of metal phosphate with good layer morphology, such having an improved layer coverage (e.g. substantially covering the entire deposition area, including being pinhole-free and being free of cracks), being conformal, having a good adhesion (e.g. not locally delaminated) and having a relatively uniform thickness (e.g. compared to layers deposited in the absence of the present agent). This objective is accomplished by a method and use according to the present invention.

It is an advantage of embodiments of the present invention that densely covering, conformal, homogeneous and uniformly thick layers of metal phosphate can be deposited. It is a further advantage of embodiments of the present invention that complex (e.g. 3D) electrode structures can be conformally coated with a well adhering layer, e.g. in contrast to electrochemical deposition methods according to the prior art or alternative deposition methods like sputtering.

It is a further advantage of embodiments of the present invention that they can be performed in a relatively straightforward and economical fashion. It is a further advantage of embodiments of the present invention that they utilize relatively cheap precursors and are easily scalable, e.g. compared to alternative metal phosphate deposition methods like sputtering, atomic layer deposition and pulsed laser deposition.

It is an advantage of embodiments of the present invention that the morphology of the layer of metal phosphate can be tuned by controlling various deposition parameters (e.g. deposition time, current density, temperature, composition of the precursor solution, etc.).

In a first aspect, the present invention relates to a method for depositing a layer of metal phosphate, comprising: a) providing a working electrode in contact with a solution comprising metal cations and phosphate anions; and b) electrochemically forming the layer of metal phosphate onto the working electrode; wherein the layer of metal phosphate comprises a plurality of dome-shaped substructures and the solution further comprises an agent which promotes said dome-shaped substructures being formed such that an average size thereof is reduced.

In a second aspect, the present invention relates to an agent in an electrochemical deposition of a layer of metal phosphate comprising a plurality of dome-shaped substructures, for promoting said dome-shaped substructures being formed such that an average size thereof is reduced.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG 1 schematically depicts the principal reactions occurring during an electrochemical deposition of metal phosphates in accordance with the present invention and the prior art.

FIG 2 is a SEM (scanning electron microscope) image of a vertical cross-section of dome-shaped substructure in accordance with the present invention.

FIG 3 schematically depicts the formation and growth of dome-shaped substructures.

FIG 4 schematically depicts the formation of dome-shaped substructures with voids (e.g. pinholes) in-between (left), coalescence of the dome-shaped substructures (middle), and cracking and delamination of the deposited metal phosphate layer (right).

FIG 5 is a SEM image of a vertical cross-section of a layer of metal phosphate in accordance with an exemplary embodiment of the present invention (corresponding to the same stage and layer as FIG 16 and FIG 17).

FIG 6 is graph of the measured potential in function of time (U-t profile) for an electrochemical deposition of metal phosphates in accordance with a first comparative example.

FIG 7 is an aerial view SEM image of a metal phosphate layer comprising dome-shaped substructures with voids (e.g. pinholes) in-between, in accordance with a first comparative example.

FIG 8 is an aerial view SEM image of a metal phosphate layer with coalescence of the dome-shaped substructures, in accordance with a first comparative example.

FIG 9 is an aerial view SEM image of a metal phosphate layer with cracking and delamination of the deposited layer, in accordance with a first comparative example.

FIG 10 is an aerial view SEM image of a metal phosphate layer comprising dome-shaped substructures, in accordance with a second comparative example.

FIG 11 is an aerial view SEM image with higher magnification of the metal phosphate layer of FIG 10.

FIG 12 is a top view SEM image of metal phosphate dome-shaped substructures, in accordance with a second comparative example.

FIG 13 is an aerial view SEM image of a metal phosphate layer with cracking and delamination of the deposited layer, in accordance with a second comparative example

FIG 14 is graph of the measured potential in function of time (U-t profile) for an electrochemical deposition of metal phosphates in accordance with an exemplary embodiment of the present invention.

FIG 15 is an aerial view SEM image of a metal phosphate layer comprising dome-shaped substructures with voids (e.g. pinholes) in-between, in accordance with an exemplary embodiment of the present invention.

FIG 16 is an aerial view SEM image of a metal phosphate layer with coalescence of the dome-shaped substructures, in accordance with an exemplary embodiment of the present invention.

FIG 17 is an aerial view SEM image with higher magnification of the metal phosphate layer of FIG 16.

FIG 18 is an aerial view SEM image of a metal phosphate layer beyond coalescence, in accordance with an exemplary embodiment of the present invention.

FIG 19 is an aerial view SEM image of a metal phosphate layer further beyond coalescence, in accordance with an exemplary embodiment of the present invention.

FIG 20 is a top view SEM image of metal phosphate dome-shaped substructures, in accordance with an exemplary embodiment of the present invention.

FIG 21 is a top view SEM image of metal phosphate dome-shaped substructures, in accordance with an exemplary embodiment of the present invention.

FIG 22 is an FTIR (Fourier transform infrared spectroscopy) spectra of two differently deposited metal phosphate layers in accordance with exemplary embodiments of the present invention.

FIG 23 is a side view TEM (transmission electron microscopy) image of a metal phosphate layer as in FIG 21.

FIG 24 is a side view TEM image with higher magnification of the metal phosphate layer of FIG 23.

FIG 25 is a side view TEM image of a metal phosphate layer as in FIG 20.

FIG 26 is a side view TEM image with higher magnification of the metal phosphate layer of FIG 25.

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term 'comprising' therefore covers the situation where only the stated features are present and the situation where these features and one or more other features are present. Thus, the scope of the expression 'a device comprising means A and B' should not be interpreted as being limited to devices consisting only of components A and B. It means that with respect to the present invention, the only relevant components of the device are A and B.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, the term 'metal phosphate' refers to a compound-typically a salt-comprising metal cations and phosphate anions. Herein, the metal cations can be from any metal, including but not limited to Li (e.g. $Li^+$), Be (e.g. $Be^{2+}$), Mg (e.g. $Mg^{2+}$), Ca (e.g. $Ca^{2+}$), Ba (e.g. $Ba^{2+}$) and Al (e.g. $Al^{3+}$). The phosphate anions can be $H_2PO_4^-$, $HPO_4^{2-}$ or $PO_4^{3-}$. For a given metal, the solubility (in water) of its metal phosphates often follows the general trend: $H_2PO_4^-$ > $HPO_4^{2-}$ > $PO_4^{3-}$ (i.e. the compound formed with $H_2PO_4^-$ is the most soluble and the compound formed from with $PO_4^{3-}$ is the least soluble). Accordingly, in the deposited layer (or 'film') of metal phosphate, the phosphate may typically be $HPO_4^{2-}$ or $PO_4^{3-}$, preferably $PO_4^{3-}$.

As used herein, and unless otherwise specified, the term 'solubility product $K_{sp}$' refers to the equilibrium constant for the dissolution of a solid compound (e.g. a salt) in an aqueous solution. A lower $K_{sp}$ value indicates a lower solubility of the substance. For example, a compound with a $K_{sp}$ of $1 \times 10^{-10}$ or lower can be considered to have a (very) low solubility in aqueous solutions. Conversely, a compound with a $K_{sp}$ of $1\times10^1$ or more can be considered to be (highly) soluble in aqueous solutions. Measured and/or calculated $K_{sp}$ values for a given compound tend to show some variation, depending on the measurement technique used and/or the literature source consulted. As used herein, the solubility product $K_{sp}$ of selected relevant compounds are considered to be as follows:

| $LiH_2PO_4$ | $Li_3PO_4$ | $Be_3(PO_4)_2$ | $Mg_3(PO_4)_2$ | $Ca_3(PO_4)_2$ | $Ba_3(PO_4)_2$ | $AlPO_4$ |
|---|---|---|---|---|---|---|
| 10.7 | $2.37\times10^{-11}$ | $2.5\times10^{-39}$ | $1.04\times10^{-24}$ | $2.07\times10^{-29}$ | $3.4\times10^{-23}$ | $9.84\times10^{-21}$ |

For other compounds, the solubility product $K_{sp}$ can be obtained from reference tables such as TABLE 1.73 of Lange's Handbook of Chemistry (Speight, James G., ed. 2017. Lange's Handbook of Chemistry. 17th ed. New York: McGraw-Hill Education.) or as found at https://www.chm.uri.edu/weuler/chm112/refmater/KspTable.html; or can be obtained experimentally, e.g. as described by Harle et al. (HARLE, Heather D., et al. A simple method for determination of solubility in the first-year laboratory. Journal of chemical education, 2003, 80.5: 560.).

As used herein, and unless otherwise specified, the term 'current density' refers to the electric current per unit area of the working electrode surface. Negative current density values indicate a cathodic current, where the working electrode acts as the cathode in the electrochemical cell.

As used herein, and unless otherwise specified, the term 'aqueous solution' refers to a solution in which water is (one of) the solvent(s). For example, the solvent system may comprise at least 20% water, preferably at least 35%, more preferably at least 50%, still more preferably at least 65%; such as at least 75%, at least 90%, at least 95% or 100%.

As used herein, and unless otherwise specified, the term 'through-hole' in a layer refers to a hole (or 'void') penetrating through the layer and having a substantial clearing (i.e. the shortest dimension along the height of the trough-hole), for instance at least 25 nm (e.g. such that a coating deposited over the layer would typically extend down to a bottom of the through-hole, where it may make direct contact with an underlying substrate). Such a through-hole typically has a first end (e.g. an end that opens up away from the substrate, e.g. towards the bulk of the electrolyte) coplanar with a first surface of the layer and a second end (e.g. an end that opens up towards the substrate) coplanar with an opposing second surface of the layer. Depending on the nature of the through-hole, different subtypes can be distinguished. For instance, the term 'pinhole' refers to a through-hole of which at least the first end-and typically both the first and second end-has a width (being the shortest dimension of the end) which is substantially similar to its length (being the longest dimension of the end); e.g. the end may have a width and length having a ratio (width:length) of between 1:3 and 1:1, preferably between 1:2 and 1:1. The end(s) may for example be substantially round or oval in shape. Within the context of the present invention and the surrounding state of the art, pinholes in a layer may typically occur when deposition of the metal phosphate has not (yet) advanced far enough to completely cover the deposition area (i.e. the deposited layer still has 'openings'). Conversely, the term 'trench' refers to a through-hole of which at least the first end-and typically both the first and second end-has a width which is substantially shorter than its length; e.g. the end may have a width and length having a ratio (width:length) of more than 1:3, preferably 1:5 or more, more preferably 1:10 or more. The end(s) may for example be substantially (longitudinally) elongated in shape. Within the context of the present invention and the surrounding state of the art, trenches in a layer may typically occur when deposition of the metal phosphate has advanced beyond full coverage and the layer has cracked (e.g. due to internal and/or external stress).

As used herein, and unless otherwise specified, the term 'agent' is used as a shorthand for the 'agent which promotes said dome-shaped substructures being formed such that an average size thereof is reduced'. Similarly, the term 'additive'-unless otherwise specified-is used as a shorthand for 'additive which increases a solubility of $H_2$ in the solution'.

In a first aspect, the present invention relates to a method for depositing a layer of metal phosphate, comprising:

a) providing a working electrode in contact with a solution comprising metal cations and phosphate anions; and b) electrochemically forming the layer of metal phosphate onto the working electrode; wherein the layer of metal phosphate comprises a plurality of dome-shaped substructures and the solution further comprises an agent which promotes said dome-shaped substructures being formed such that an average size thereof is reduced.

In general, electrochemical deposition of metal phosphates can occur as schematically depicted in FIG 1. Therein, a solution (30) comprising metal cations and phosphate anions (herein also referred to as 'precursor mixture') is brought into contact with an electrically conductive working electrode (10)-which also functions as the substrate on which the layer of metal phosphate (20) will be formed-, an electrically conducting counter electrode (e.g. an inert conductive metal with large surface area, such as Ti mesh or Pt mesh; not depicted in FIG 1), and optionally a counter electrode (e.g. Ag/AgCl; also not depicted in FIG 1). In embodiments, the working electrode may be a metallic electrode, such as a TiN electrode.

The aforementioned solution (30) is typically an aqueous solution; or at least comprises an electrochemically reducible solute and/or solvent, of which a reaction product of said reduction is a base which can mediate phosphate deprotonation near the working electrode (10). By electrolytically reducing said solute and/or solvent (e.g. water) at the working electrode (10)-e.g.

$$2H_2O(l) + 2e^- \rightarrow H_2(g) + 2OH^-(aq),$$

and/or

$$2H^+(aq) + 2e^- \rightarrow H_2(g)$$

-a diffusion layer (31) is formed above the working electrode (10), having a gradient of the mediating base (e.g. hydroxide) with a high concentration near the working electrode surface and tapering off towards the bulk solution (32). In embodiments, step b may comprise operating the working electrode (e.g. with respect to the counter electrode) such as to electrolytically reduce the electrochemically reducible solute and/or solvent (e.g. water) at the working electrode (cf. supra). In embodiments, operating the working electrode may be performed under potentiostatic or galvanostatic control, preferably under galvanostatic control.

Accordingly, the principal reaction in the bulk solution (32) is the association/dissociation of the metal cations (e.g. $Li^+$, $Ca^{2+}$ or $Al^{3+}$) and phosphate anions (e.g. $H_2PO_4^-$)-which tends to be tilted towards dissociation due to their association product typically being highly soluble in the solution-:

$$M(\mathrm{H_2PO_4})_a(aq) \rightleftharpoons \mathrm{M^{a+}}(aq) + \mathrm{aH_2PO_4^-}(aq).$$

On the other hand, because of the presence of the mediating base, the pH in the diffusion layer (31) is locally increased, triggering deprotonation of phosphates near the working electrode (10). This phosphate deprotonation has been summarized into a single reaction in FIG 1, but may typically involve several reactions such as:

$$\mathrm{H_3PO_4}(aq) + \mathrm{OH^-} \rightleftharpoons \mathrm{H_2PO_4^-}(aq) + \mathrm{H_2O}(l)$$

$$\mathrm{H_2}PO_4^{2-}(aq) + \mathrm{OH^-} \rightleftharpoons \mathrm{HPO_4^{2-}}(aq) + \mathrm{H_2O}(l)$$

$$\mathrm{HPO_4^{2-}}(aq) + \mathrm{OH^-} \rightleftharpoons \mathrm{PO_4^{3-}}(aq) + \mathrm{H_2O}(l)$$

In contrast to that with $H_2PO_4^-$ (and to a lesser extent $HPO_4^{2-}$), the solubility of the association product between the metal ion and $PO_4^{3-}$ is in the solution typically (very) low, leading to local supersaturation and precipitation of the metal phosphate (e.g. $Li_3PO_4$, $Ca_3(PO_4)_2$ or $AlPO_4$):

$$^3/_b\,\mathrm{M^{a+}}(aq) + {}^a/_b\,\mathrm{PO_4^{3-}}(aq) \rightleftharpoons M_{3/b}(\mathrm{PO_4})_{a/b}(s) \downarrow.$$

Because of the concentration gradient of the mediating base, the concentration of $PO_4^{3-}$ shows a similar gradient. Hence, also the metal phosphate is produced near the working electrode (10), where it forms a layer (20) onto the working electrode (10). Accordingly, precipitation of the metal phosphate is induced near the working electrode (10) via electrolytical reduction of the solute and/or solvent.

In embodiments, the metal phosphate may have a solubility product $K_{sp}$ of at most $1 \times 10^{-5}$, preferably at most

$1\times10^{-7}$, more preferably at most $1\times10^{-9}$, yet more preferably at most $1\times10^{-10}$; such at most $1\times10^{-12}$, at most $1\times10^{-15}$, at most $1\times10^{-18}$, or at most $1\times10^{-20}$. A lower solubility (lower solubility product $K_{sp}$) relates to faster supersaturation and thereby typically to earlier and easier formation of the metal phosphate through precipitation.

In embodiments, the metal (M) may be selected from Li, Be, Mg, Ca, Ba and Al. These metals advantageously form phosphates of which the solubility (in water) is low enough to deposit (good) layers thereof through (electrochemically induced) precipitation. In preferred embodiments, the metal may be Li. The present invention has proven to be particularly effective for depositing uniform layers of lithium phosphate, which has in particular been a challenge herebefore (cf. background).

In embodiments, the ratio of metal cations to phosphate anions (i.e. $[M^{3+}]/([H_3PO_4] + [H_2PO_4^-] + [HPO_4^{2-}] + [PO_4^{3-}])$ ) may be from 25 to 150, preferably from 50 to 135. A relatively high ratio of metal cations to phosphate anions advantageously ensures that any $PO_4^{3-}$ formed near the working electrode surface readily reacts with the abundance of metal ions present and thus quickly precipitates (e.g. before migrating away from the working electrode surface).

In embodiments, the phosphate anions may comprise $H_3PO_4$, $H_2PO_4^-$, $HPO_4^{2-}$ and/or $PO_4^{3-}$, preferably at least $H_2PO_4^-$ and/or $HPO_4^{2-}$. In embodiments, the phosphate anion precursor added to the solution may be a salt comprising $H_2PO_4^-$ or $HPO_4^{2-}$, preferably $H_2PO_4^-$.

Yet, performing the above using a solution comprising only the metal cations, phosphate anions and solvent results in layers with very high surface roughness and overall poor layer morphology, as also seen in Liu et al. and Lopez et al. More specifically, it yields layers that are either porous and loosely packed, or cracked and (partially) delaminated.

In this regard, it was presently found that the layer of metal phosphate has a microstructure formed of a plurality of dome-shaped (e.g. roughly hemispherical) substructures (21); as e.g. visible in FIG 2. As schematically depicted in FIG 3,-without being bound by theory-these dome-shaped substructures (21) are believed to be comprised of an interior bubble (22) of electrochemically formed gaseous hydrogen (e.g. as a byproduct of reducing the solute and/or solvent, cf. supra), surrounded by a shell (23) of the precipitated metal phosphate. As deposition continues, the metal phosphate shell (23) grows, typically until either a critical size is reached, or the dome-shaped substructures (21) coalesce (cf. FIG 3). Moreover,-as schematically depicted in FIG 4-it is believed that porous and loosely packed layers are then the result of stopping the deposition prematurely (i.e. before these dome-shaped substructures (21) coalesce); while cracking and delamination is caused by the hydrogen seeking to escape from between the working electrode (10) and the layer of metal phosphate (20), thereby damaging the layer of metal phosphate (20).

It was however surprisingly found within the present invention that the addition of certain agents to the solution allows to continue the deposition until-and beyond-coalescence of the metal phosphate hemispheres, without-or at least reducing-cracking and/or delamination of the layer of metal phosphate; thus allowing to form layers with better layer morphology (e.g. with better coverage, conformality and thickness uniformity). These agents were found to have in common that they promote the dome-shaped substructures to be formed with a lower average size. Although the exact mechanism therefor is presently not fully understood, this may be due to do the agent promoting the formation of (more but) smaller $H_2$ bubbles on the working electrode surface (e.g. through stabilizing such smaller bubbles). These smaller bubbles can then act as nucleation sites for the precipitation of the metal phosphate, resulting in dome-shaped substructures with smaller size, thereby forming a smoother layer of metal phosphate. Such smaller dome-shaped substructures may moreover be inherently stronger and/or the smaller bubbles exert less stress thereon, thereby reducing the issues of cracking and delamination. In this regard, it was further observed (e.g. in turbidity experiments) that precipitation of the metal phosphate occurs at considerably lower pH values in the presence of an agent (e.g. about 6.2-6.5 in the presence of 0.44 M EMIM DEP and 25 % v/v ethanol, vs about 8.7-9.0 without agent nor additive). Alternatively, or complimentary thereto, the agent may provide an (increased) alternative avenue for the $H_2$ to escape from the bubble (e.g. through promoting diffusion of $H_2$), thereby likewise reducing the stress on the metal phosphate.

Whether a particular compound is an 'agent which promotes said dome-shaped substructures being formed such that an average size thereof is reduced' (i.e. reduced compared to a situation wherein the agent is not present-or present but not active-), can be easily determined experimentally. Indeed, one can perform a first experiment in the absence of the compound and a second experiment with the compound present (and active) in the solution, and determine-using a suitable technique (e.g. SEM imaging followed by image analysis) the size of the substructures in the first experiment and in the second experiment. If the sized of the substructures is significantly lower (e.g. at least 10% lower, preferably at least 20% lower, more preferably at least 30% lower, yet more preferably at least 50% lower, most preferably at least 70% lower) following the second experiment, then the compound is an agent in accordance with the present invention.

In embodiments, such agent may be an organic ionic compound comprising a dialkyl imidazolium cation and/or a dialkyl phosphate anion. Generally, each alkyl therein may be independently selected; for example from methyl, ethyl, propyl (e.g. n-propyl, isopropyl or cyclopropyl), butyl (e.g. n-butyl, sec-butyl, isobutyl or tert-butyl), etc. In preferred embodiments, the dialkyl imidazolium may be a 1-$R_1$-3-$R_2$-methylimidazolium (wherein $R_1$ and $R_2$ are each an inde-

pendently selected alkyl as before); such as 1-ethyl-3-methylimidazolium (EMIM) or 1,3-diethylimidazolium (DEIM), preferably 1-ethyl-3-methylimidazolium. In embodiments, the dialkyl phosphate may be diethyl phosphate (DEP). In preferred embodiments, the agent may be 1-ethyl-3-methylimidazolium diethyl phosphate (EMIM DEP).

In embodiments, the agent may have a concentration of from 0.02 to 1 M, preferably from 0.1 to 1.0 M, more preferably from 0.1 to 0.7 M, yet more preferably from 0.2 to 0.7 M, still yet more preferably from 0.2 to 0.6 M; such as 0.11 M or 0.44 M. Concentrations in this range were advantageously found to be highly effective for improving the morphology of the layer of metal phosphate.

In embodiments, the solution may further comprise an additive which increases a solubility of $H_2$ in the solution. Without being bound by theory, although increasing the solubility of $H_2$ does as such not resolve the issues regarding the morphology of the layer of metal phosphate (cf. comparative example 1B), by increasing the solubility of $H_2$ therein, the solution is better able to accept $H_2$ and thereby-in combination with the agent-advantageously reduces the effects thereof on the layer morphology. In embodiments, said additive may be an alcohol, preferably ethanol. Alcohols are advantageously effective at increasing $H_2$ solubility. In embodiments, the additive may have a concentration of from 1 to 10 M, preferably from 3 to 6 M; such as about 4.4 M. Concentrations in this range were advantageously found to be highly effective for contributing to improving the morphology of the layer of metal phosphate.

The above notwithstanding, a higher amount of additive (e.g. at least 30% v/v, preferably at least 35% v/v) may-similarly to the agents as above-described-promote the dome-shaped substructures being formed such that an average size thereof is reduced (cf. example 1D). Accordingly, such an additive can in those cases also be considered as an agent within the meaning of the present invention. While this improves the morphology of the metal phosphate layer to some extent, yet a better morphology (e.g. less porous) can typically be obtained when the agent is incorporated into the deposited layer (see e.g. example 1D). The agent may thus in preferred embodiments be incorporated in the layer of metal phosphate (i.e. the layer of metal phosphate formed in step b may comprise the agent).

In embodiments, step b may be performed for a duration of from 1 to 1000 seconds, preferably from 5 to 200 seconds. The optimal duration typically depends on many factors, including the composition of the precursor solution, reaction conditions, current density, etc. Notwithstanding, it typically strikes a balance between being long enough to ensure adequate surface coverage (thereby e.g. avoiding pinholes), but short enough to avoid issues related to overlong deposition (e.g. cracking and/or delamination of the layer). For example, a deposition time such that the dome-shaped substructures have coalesced to the point of just completely covering the desired surface-or slightly beyond-may typically yield layers of metal phosphate with the desired layer morphology.

In embodiments, step b may be performed at a temperature between 0 °C and 50 °C, preferably between 5 °C and 30 °C. Lower temperatures were advantageously found to typically yield smaller substructures being deposited.

In embodiments, step b may comprise using a current density of from $-0.2\ mA/cm^2$ to $-50\ mA/cm^2$, preferably from $-0.5\ mA/cm^2$ to $-5\ mA/cm^2$. Lower current densities were advantageously found to typically yield increased surface coverage.

In some embodiments, step b may comprise a two-step process. For example, the two-step process may comprise a short initial burst at higher current densities, followed by a longer sustained application at lower current density. In these embodiments, the short initial burst may comprise a current density of from $-5\ mA/cm^2$ to $-50\ mA/cm^2$ for 0.0001 to 5 seconds. The longer sustained application may comprise a current density of from $-0.5\ mA/cm^2$ to $-5\ mA/cm^2$ for 30 to 1000 seconds. Without being bound by theory, it is believed that such a two-step process advantageously enables rapid nucleation early on, followed by steady growth.

In embodiments, any feature of any embodiment of the first aspect may independently be as correspondingly described for any embodiment of any of the other aspects.

In a second aspect, the present invention relates to an agent in an electrochemical deposition of a layer of metal phosphate comprising a plurality of dome-shaped substructures, for promoting said dome-shaped substructures being formed such that an average size thereof is reduced.

In embodiments, the electrochemical deposition may be electrochemically induced precipitation.

In embodiments, any feature of any embodiment of the second aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

**Example 1:** Electrochemical deposition of lithium phosphate

***Comparative example 1A:*** *Without agent or additive*

To have a standard for comparison, electrochemical deposition of lithium phosphate was performed in the

absence of any agent or additive.

To this end, an aqueous precursor mixture of a lithium-ion precursor and a monobasic phosphate (and lithium-ion) precursor in water was made as indicated below. The experimental setup involved adding this aqueous mixture as an electrolyte solution to an electrochemical cell as described above with reference to FIG 1, and depositing a layer of lithium phosphate ($Li_3PO_4$) following the procedure as described there. The electrochemical deposition was performed under galvanostatic control at the current density as indicated in the table. The reaction conditions used-pH in the bulk solution (bulk pH) and reaction temperature (reaction T; RT = room temperature) and current density-are also listed in the table. The substrate (working electrode) for the layer deposition was a TiN rotating disc electrode (RDE) operated at 300 rpm.

| # | metal precursor | phosphate precursor | agent | additive | bulk pH | reaction T | current density |
|---|---|---|---|---|---|---|---|
| comparative 1 | 1.5 M $Li_2SO_4$ | 0.5 M $LiH_2PO_4$ | / | / | 3.8 | RT | -18.9 mA/cm2 |

A graph of the measured potential in function of time (U-t profile) for a deposition according to the above formulation is shown FIG 6, while FIG 7-FIG 9 are representative scanning electron microscope (SEM) images taken at different points (i.e. different times) along this deposition. These three images also align with the three stages described above with reference to FIG 4: dome-shaped substructures forming islands with voids (e.g. pinholes) in-between (FIG 7), coalescence of the dome-shaped substructures (FIG 8), and cracking and delamination of the deposited layer (FIG 9). The general location of these stages is also indicated in FIG 6. Accordingly, formulation according to this comparative example led to issues (e.g. the layer being porous and loosely packed, or cracked and delaminated) in line with those seen in the prior art (cf. background).

***Comparative example 1B:** Without agent but with additive*

Comparative example 1A was repeated, but the aqueous precursor mixture further included ethanol as additive (cf. supra). Moreover, a few different combinations of reaction temperature and current density were used.

| # | metal precursor | phosphate precursor | agent | additive | bulk pH | reaction T | current density |
|---|---|---|---|---|---|---|---|
| comparative 2 | 0.5 M $Li_2SO_4$ | 0.01 M $LiH_2PO_4$ | / | 25% v/v ethanol | 4.7 | RT | -1.26 $mA/cm^2$ |
| comparative 3 | 0.5 M $Li_2SO_4$ | 0.01 M $LiH_2PO_4$ | / | 25% v/v ethanol | 4.7 | RT | -1.89 $mA/cm^2$ |
| comparative 4 | 0.5 M $Li_2SO_4$ | 0.01 M $LiH_2PO_4$ | / | 25% v/v ethanol | 4.7 | RT | -2.84 $mA/cm^2$ |
| comparative 5 | 0.5 M $Li_2SO_4$ | 0.01 M $LiH_2PO_4$ | / | 25% v/v ethanol | 4.7 | 10 °C | -2.84 $mA/cm^2$ |

Representative SEM images for comparative formulation 5 are shown in FIG 10-FIG 13. As seen in FIG 10 and FIG 11, the addition of the ethanol did not change that the metal phosphate is-at least initially-deposited as a plurality of dome-shaped substructures. In FIG 12, which shows the result of a deposition that was deliberately stopped substantially before a full layer is formed, the substructures had an average size (area) of (0.54 $\pm$ 0.07) $\mu m^2$. Likewise, the addition of ethanol also did not change that for deposition beyond coagulation, cracking and delamination would occur (cf. FIG 13).

***Example 1A:** With agent and additive*

Comparative example 1B was repeated, but the aqueous precursor mixture further included-alongside the ethanol additive-EMIM DEP as an agent (0.11 M = 2.8% v/v; 0.44 M = 10% v/v). Moreover, a few different combinations of reaction conditions and current density were used.

| # | metal precursor | phosphate precursor | agent | additive | bulk pH | reaction T | current density |
|---|---|---|---|---|---|---|---|
| 1 | 0.5 M $Li_2SO_4$ | 0.01 M $LiH_2PO_4$ | 0.11 M EMIM DEP | 25% v/v ethanol | 5.2 | RT | -1.26 $mA/cm^2$ |

(continued)

| # | metal precursor | phosphate precursor | agent | additive | bulk pH | reaction T | current density |
|---|---|---|---|---|---|---|---|
| 2 | 0.5 M $Li_2SO_4$ | 0.01 M $LiH_2PO_4$ | 0.11 M EMIM DEP | 25% v/v ethanol | 5.2 | RT | -1.89 $mA/cm^2$ |
| 3 | 0.5 M $Li_2SO_4$ | 0.01 M $LiH_2PO_4$ | 0.11 M EMIM DEP | 25% v/v ethanol | 5.2 | 10 °C | -1.89 $mA/cm^2$ |
| 4 | 0.5 M $Li_2SO_4$ | 0.01 M $LiH_2PO_4$ | 0.44 M EMIM DEP | 25% v/v ethanol | 6.4 | 10 °C | -2.84 $mA/cm^2$ |

A graph of the measured potential in function of time (U-t profile) for a deposition according to the above formulation is shown FIG 14, while FIG 5 and FIG 15-FIG 20 are representative SEM images taken at different points (i.e. different times) along this deposition. As seen in these SEM images, the deposited layer initially went through similar stages as previously described under comparative example 1A (e.g. dome-shaped substructures forming islands with voids-e.g. pinholes-in-between, cf. FIG 15; and coalescence of the dome-shaped substructures, cf. FIG 16 and FIG 17). Conversely, following the coalescence stage, deposition continued initially without any cracks being visible (FIG 18). After further prolonged deposition, some surface defects (visually appearing similar to 'cracks', though significantly less so than in comparative example 1A and 1B) could be observed (FIG 19). This reduction in cracking was tentatively attributed to the agent enabling a way for the built-up hydrogen to escape from between the working electrode and the metal phosphate (e.g. via diffusion through the metal phosphate) other than breaking the film (as occurs exceedingly in comparative example 1A and 1B). Moreover, while the vertical cross-section similar to FIG 5 is herein not shown for comparative example 1A and 1B, the surface roughness and thickness uniformity (($118 \pm 37$) nm; cf. FIG 5) at the stage of coalescence and full surface coverage were significantly better than for comparative example 1A and 1B. This could be attributed to the dome-shaped substructures formed being significantly smaller in the presence of the agent: for instance, in FIG 20 the average size (area) of the substructures was only ($0.07 \pm 0.04$) $\mu m^2$ (vs ($0.54 \pm 0.07$) $\mu m^2$ in FIG 12 for comparative example 1B; cf. supra).

Note that while in the formulations according to the present invention tabled above and under Example 1B ethanol is always present, the use of an additive is nevertheless not essential. Indeed, while it is typically beneficial to include both an agent and additive, formulations with agent but without additive (not tabled) are still advantageous over those without agent and with or without additive (cf. comparative example 1A and comparative example 1B).

***Example** 1B: Effect of different agents*

Example 1A was repeated, but using various alternatives to EMIM DEP as agent.

| # | metal precursor | phosphate precursor | agent | additive | bulk pH | reaction T | current density |
|---|---|---|---|---|---|---|---|
| 5 | 0.5 M $Li_2SO_4$ | 0.01 M $LiH_2PO_4$ | 0.11 M DEIM DEP | 25% v/v ethanol | 5.2 | RT | -1.89 $mA/cm^2$ |
| 6 | 0.5 M $Li_2SO_4$ | 0.01 M $LiH_2PO_4$ | 0.44 M EMIM Cl | 25% v/v ethanol | 5.6 | RT | -1.89 $mA/cm^2$ |
| 7 | 0.5 M $Li_2SO_4$ | 0.01 M $LiH_2PO_4$ | 0.44 M EMIM Cl | 25% v/v ethanol | 5.6 | 10 °C | -1.89 $mA/cm^2$ |
| 8 | 0.5 M $Li_2SO_4$ | 0.01 M $LiH_2PO_4$ | 0.44 M EMIM Cl | 25% v/v ethanol | 5.6 | RT | -2.84 $mA/cm^2$ |
| 9 | 0.5 M $Li_2SO_4$ | 0.01 M $LiH_2PO_4$ | 0.44 M EMIM Cl | 25% v/v ethanol | 5.6 | 10 °C | -2.84 $mA/cm^2$ |
| 10 | 0.5 M $Li_2SO_4$ | 0.01 M $LiH_2PO_4$ | 0.44 M H DEP | 25% v/v ethanol | 4.9 | RT | -2.84 $mA/cm^2$ |
| 11 | 0.5 M $Li_2SO_4$ | 0.01 M $LiH_2PO_4$ | 0.44 M H DEP | 25% v/v ethanol | 4.9 | 10 °C | -2.84 $mA/cm^2$ |

In general, these alternative agents yielded deposited layers that were a significant improvement-even if not quite as much as EMIM DEP-over those of comparative example 1A and 1B. Similar to EMIM DEP (example 1A), the dome-shaped substructures formed were likewise found to be significantly smaller in the presence of these alternative agents.
Using EMI Cl (formulations 6-9), compared to EMIM DEP (example 1A), the morphology was largely the same-except that the dome-shaped substructures formed were slightly larger-, and the U-t profile shifted to a less negative potential but otherwise remained the same.
Using H DEP (formulations 10-11), compared to EMIM DEP (example 1A), the morphology changed slightly-though the dome-shaped substructures formed were only slightly larger-, but the U-t profile showed more profound changes (e.g. comprising a positive slope where EMI DEP had a negative slope).
Using DEIM DEP (formulation 5), compared to EMIM DEP (example 1A), the morphology changed slightly-with the surface of the deposited in layer in the SEM images (not shown) being noticeable rougher and/or non-homogeneous, though the dome-shaped substructures formed were only somewhat larger-, and the U-t profile showed broadly similar tendencies.

***Comparative example 1C:*** *With compounds that do not function* as *an agent*

Example 1B was repeated, but using F127 (poly(ethylene glycol)-block-poly(propylene glycol)-block-poly(ethylene glycol) diacrylate) and CTAB (cetyltrimethylammonium bromide) as alternative compounds to the agent.

| # | metal precursor | phosphate precursor | compound | additive | bulk pH | reaction T | current density |
|---|---|---|---|---|---|---|---|
| comparative 6 | 0.5 M $Li_2SO_4$ | 0.05 M $LiH_2PO_4$ | 0.1 mM F127 | 25% v/v ethanol | 4.65 | RT | -1.1 $mA/cm^2$ |
| comparative 7 | 0.5 M $Li_2SO_4$ | 0.01 M $LiH_2PO_4$ | 0.2 M CTAB | 25% v/v ethanol | 5.2 | RT | -1.26 $mA/cm^2$ |

Neither of these alternatives yielded deposited layers that were markedly improved over those of comparative example 1A and 1B. Similar to EMIM DEP (example 1A). Moreover, the dome-shaped substructures formed in the presence of these compounds were not found to be significantly smaller; hence these compounds did not function as an agent in accordance with the present invention.

***Example 1C:*** *Effect of different reaction parameters*

Comparative example 1A was repeated, but using different combinations of reaction conditions parameters to identify their effect on the deposited layer of metal phosphate. Where needed, small amounts of KOH or $H_2SO_4$ were further added to tune the bulk pH to the desired value.

| # | metal precursor | phosphate precursor | agent | additive | bulk pH | reaction T | current density |
|---|---|---|---|---|---|---|---|
| comparative 8 | 1.5 M $Li_2SO_4$ | 0.1 M $LiH_2PO_4$ | / | / | 3.8 | RT | -6.3 $mA/cm^2$ |
| comparative 9 | 1.5M $Li_2SO_4$ | 0.5 M $LiH_2PO_4$ | / | / | 3.8 | RT | -6.3 $mA/cm^2$ |
| comparative 10 | 1.5 M $Li_2SO_4$ | 0.5 M $LiH_2PO_4$ | / | / | 3.8 | RT | -12.6 $mA/cm^2$ |
| comparative 11 | 1.5 M $Li_2SO_4$ | 0.5 M $LiH_2PO_4$ | / | / | 3.8 | RT | -18.9 $mA/cm^2$ |
| comparative 12 | 1.5 M $Li_2SO_4$ | 0.5 M $LiH_2PO_4$ | / | / | 4.5 | RT | -6.3 $mA/cm^2$ |

It was found that generally: lower current density resulted in increased surface coverage; higher bulk pH resulted in increased homogeneity; higher lithium concentration resulted in a faster precipitation rate (which in turn allowed to utilize lower current densities); a lower initial phosphate concentration resulted in faster precipitation and lower surface roughness (again allowing to utilized lower current densities) and lower temperature resulted in smaller substructures being deposited.
While these experiments were performed on formulations without agent nor additive, the same trends were observed also for formulations with the agent (and optional additive).

***Example** 1D: Effect of constant vs two-step current density*

Example 1A was repeated, but comparing a constant current density (-2.84 mA/cm2 applied for 42 s) to a two-step current density with a short initial burst at higher current density (-6.31 mA/cm2 for 1.5 s) followed by a longer sustained application at lower current density (-1.26 mA/cm2 for 55 s).

| # | metal precursor | phosphate precursor | agent | additive | bulk pH | reaction T | current density |
|---|---|---|---|---|---|---|---|
| 12 | 0.5M $Li_2SO_4$ | 0.01 M $LiH_2PO_4$ | 0.44 M EMIM DEP | 25% v/v ethanol | 6.4 | 10 °C | -2.84 $mA/cm^2$ |
| 13 | 0.5 M $Li_2SO_4$ | 0.01 M $LiH_2PO_4$ | 0.44 M EMIM DEP | 25% v/v ethanol | 6.4 | 10 °C | -6.31 → - 1.26 $mA/cm^2$ |

It was found that, compared to the constant current density, the two-step approach allowed to deposit a layer of metal phosphate with a further improved thickness uniformity.

***Example 1D:** Without agent but with more additive*

Comparative example 1B was repeated, but using more ethanol as additive.

| # | metal precursor | phosphate precursor | agent | additive | bulk pH | reaction T | current density |
|---|---|---|---|---|---|---|---|
| 14 | 0.5M $Li_2SO_4$ | 0.01 M $LiH_2PO_4$ | → | 35% v/v ethanol | 4.7 | 10 °C | -2.84 $mA/cm^2$ |

This was thus made similarly to protocol #5 described above, but using 35% v/v ethanol as opposed to 10% v/v (0.44 M) EMIM DEP and 25% v/v ethanol. A representative SEM image of a metal phosphate layer in accordance with protocol #14-taken at the same time point (10 s) as the layer shown in FIG 20, which is in accordance with protocol #5-is shown in FIG 21.

Using the higher amount of additive (compared to 25% v/v ethanol in comparative example 1B) was found to have a similar effect on the size of the substructures as the use of an agent as above-mentioned. More in particular, the average size (area) of the substructures in FIG 21 was similar to those in FIG 20 (($0.07 \pm 0.04$) $\mu m^2$), compared to the ($0.54 \pm 0.07$) $\mu m^2$ in FIG 12 for comparative example 1B. Accordingly, a sufficient amount of additive may also be considered to function as an agent in accordance with the present invention.

Notwithstanding, the use of an agent as above-mentioned (i.e. not an additive like ethanol) did yield further advantages over a high amount of additive. As can be seen in FIG 22, the FTIR spectrum of a metal phosphate layer deposited in the presence of an agent (top curve: 10% v/v (0.44 M) EMIM DEP and 25% v/v ethanol in accordance with protocol #5 and FIG 20) includes peaks corresponding to the agent; indicating that the agent was incorporated into the metal phosphate layer. By contrast, no corresponding peaks are visible in absence of the agent (bottom curve: 35% v/v ethanol in accordance with protocol #14 and FIG 21) and no peaks corresponding to ethanol are present in either curve; indicating that an additive such as ethanol is not being incorporated into the metal phosphate layer.

The same was further corroborated by TEM. In the presence of high amounts of additive (35% v/v ethanol in accordance with protocol #14 and FIG 21), the formed metal phosphate layer was slightly thicker and looser (FIG 23 and FIG 24). By contrast, TEM images of a metal phosphate layer formed in the presence of both agent and additive (10% v/v (0.44 M) EMIM DEP and 25% v/v ethanol in accordance with protocol #5 and FIG 20) showed a somewhat thinner layer with less contrast within the substructures and more difficult to distinguish individual particles with the substructures. This indicates that the presence of the agent leads to incorporation thereof in the substructures (cf. the FTIR results above), leading to denser (less porous) substructures and thus a strengthened morphology. Tentatively, the agent may fill the pores, and/or may result in the formation of less pores or smaller/less crystalline substructures. The use of sufficient additive (e.g. ethanol) can also positively affect the size of the substructure, but results in more porous and thereby less performant metal phosphate layers.

**Example 2:** Electrochemical deposition of other metal phosphate

Although Example 1 was directed specifically to the deposition of $Li_3PO_4$, the same principles hold for other metal phosphate. Accordingly, by simply changing the metal precursor (and metal/phosphate precursor), the above procedure and formulations can be used to deposit e.g. $Be_3(PO_4)_2$, $Mg_3(PO_4)_2$, $Ca_3(PO_4)_2$, $Ba_3(PO_4)_2$ or $AlPO_4$. Note in this regard

that $Li_3PO_4$ actually has the highest solubility product $K_{sp}$ out of all of these, suggesting that electrochemical deposition should be triggered more easily for the other metal phosphates.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

**1.** A method for depositing a layer of metal phosphate (20), comprising:

a) providing a working electrode (10) in contact with a solution (30) comprising metal cations and phosphate anions; and
b) electrochemically forming the layer of metal phosphate (20) onto the working electrode (10);

wherein the layer of metal phosphate (20) comprises a plurality of dome-shaped substructures (21) and the solution (30) further comprises an agent which promotes said dome-shaped substructures (21) being formed such that an average size thereof is reduced.

**2.** The method according to claim 1, wherein the metal phosphate has a solubility product $K_{sp}$ of at most $1 \times 10^{-10}$.

**3.** The method according to any of the previous claims, wherein the metal is selected from Li, Be, Mg, Ca, Ba and Al; preferably Li.

**4.** The method according to any of the previous claims, wherein the agent is an organic ionic compound comprising

- a dialkyl imidazolium cation, preferably 1-ethyl-3-methylimidazolium or 1,3-diethylimidazolium, and/or
- a dialkyl phosphate anion, preferably diethyl phosphate;

the agent preferably being 1-ethyl-3-methylimidazolium diethyl phosphate.

**5.** The method according to any of the previous claims, wherein the agent promotes diffusion of $H_2$ through the layer of metal phosphate (20).

**6.** The method according to any of the previous claims, wherein the agent has a concentration of from 0.1 to 1 M, preferably from 0.2 to 0.7 M.

**7.** The method according to any of the previous claims, wherein the solution (30) further comprises an additive which increases a solubility of $H_2$ in the solution (30).

**8.** The method according to claim 12, wherein said additive is an alcohol, preferably ethanol.

**9.** The method according to claim 12 or 8, wherein the additive has a concentration of from 1 to 10 M, preferably from 3 to 6 M.

**10.** The method according to any of the previous claims, wherein the ratio of metal cations to phosphate anions is from 25 to 150, preferably from 50 to 135.

**11.** The method according to any of the previous claims, wherein step b is performed for a duration of from 1 to 1000 seconds, preferably from 5 to 200 seconds.

**12.** The method according to any of the previous claims, wherein step b is performed at a temperature between 0 °C and 50 °C, preferably between 5 °C and 30 °C.

**13.** The method according to any of the previous claims, wherein step b comprises using a current density of from -0.2 mA/cm$^2$ to -50 mA/cm$^2$, preferably from -0.5 mA/cm$^2$ to -5 mA/cm$^2$.

**14.** The method according to claim 19, wherein step b comprises using a current density of from -5 $mA/cm^2$ to -50 $mA/cm^2$ for 0.0001 to 5 seconds, followed by a current density of from -0.5 $mA/cm^2$ to -5 $mA/cm^2$ for 30 to 1000 seconds.

**15.** Use of an agent in an electrochemical deposition of a layer of metal phosphate (20) comprising a plurality of dome-shaped substructures (21), for promoting said dome-shaped substructures being formed such that an average size thereof is reduced.

DRAWINGS

FIG 1

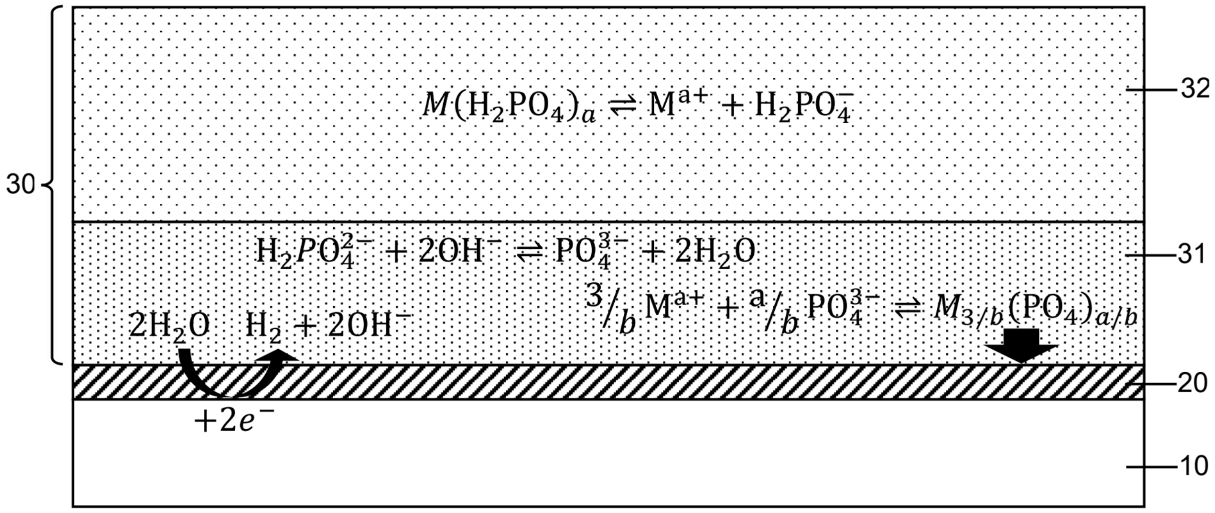


FIG 2

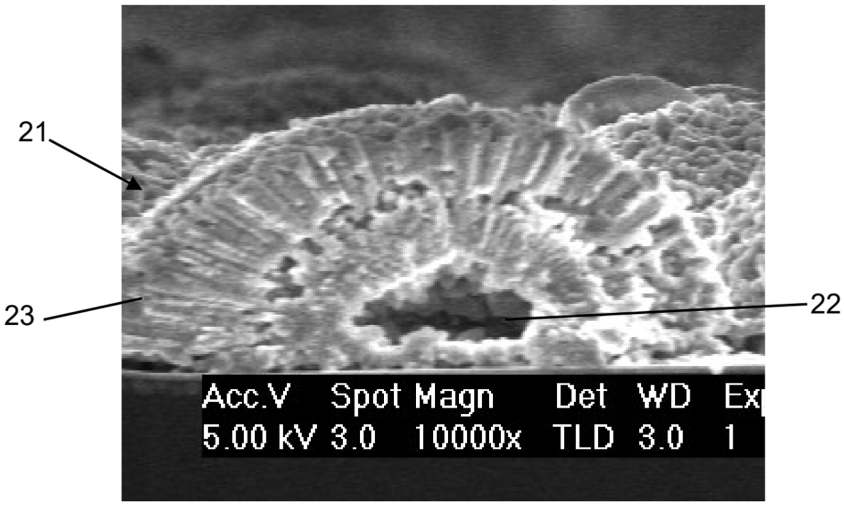


FIG 3

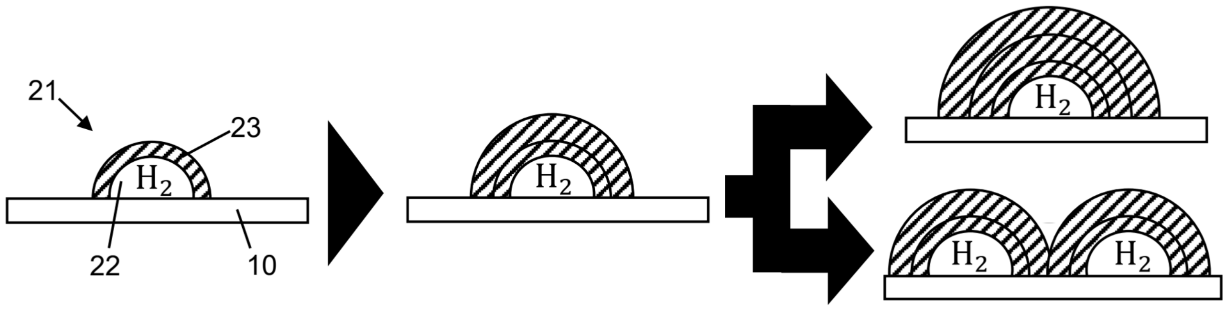

FIG 4

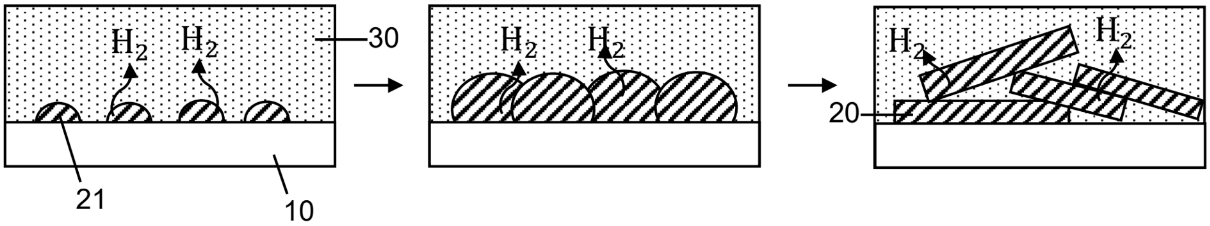


FIG 5

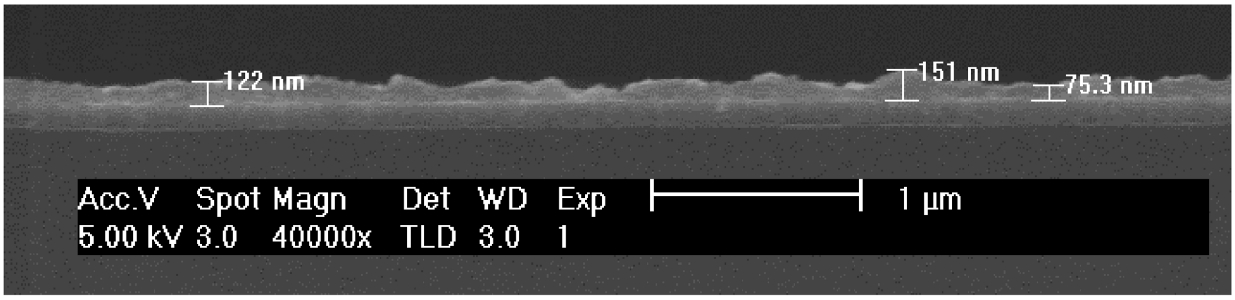


FIG 6

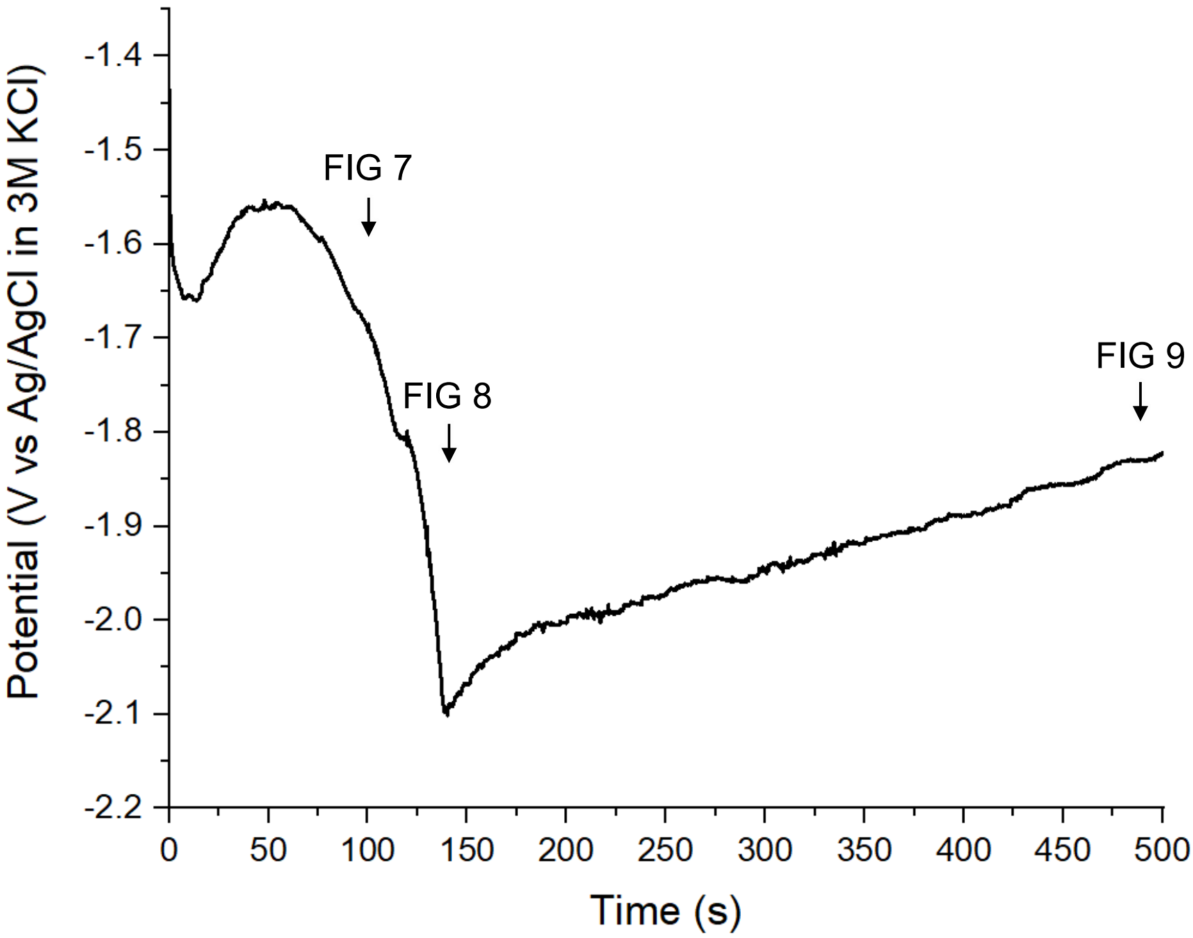

FIG 7

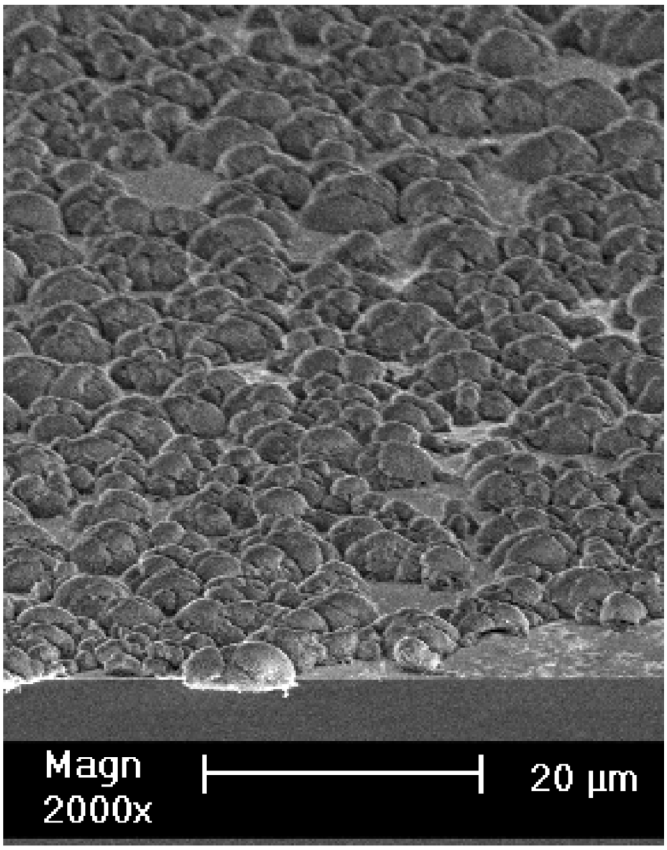


FIG 8

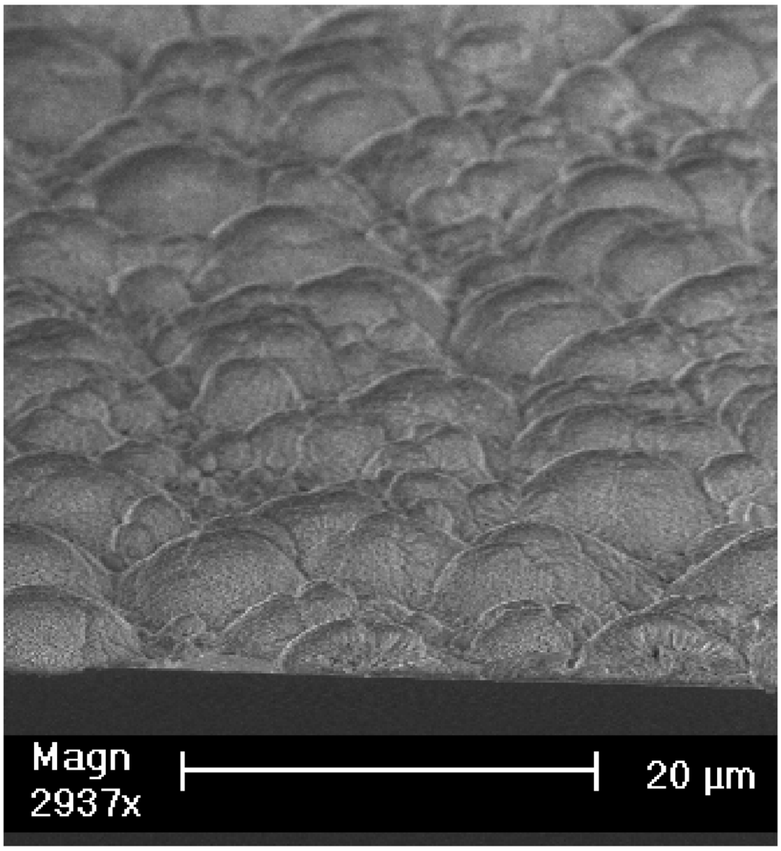

**FIG 9**

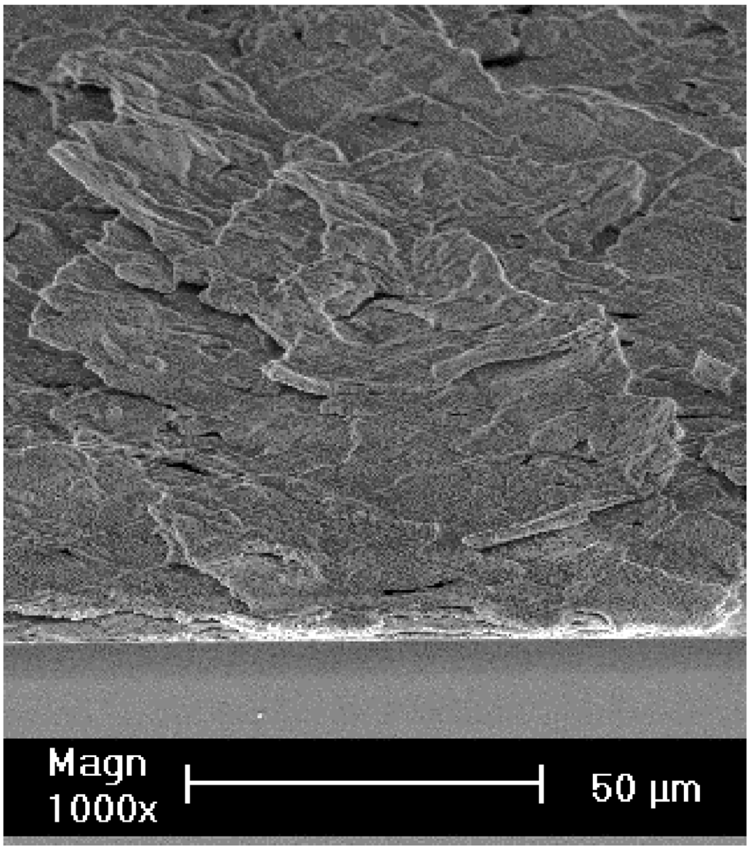
Magn
1000x
50 µm

**FIG 10**

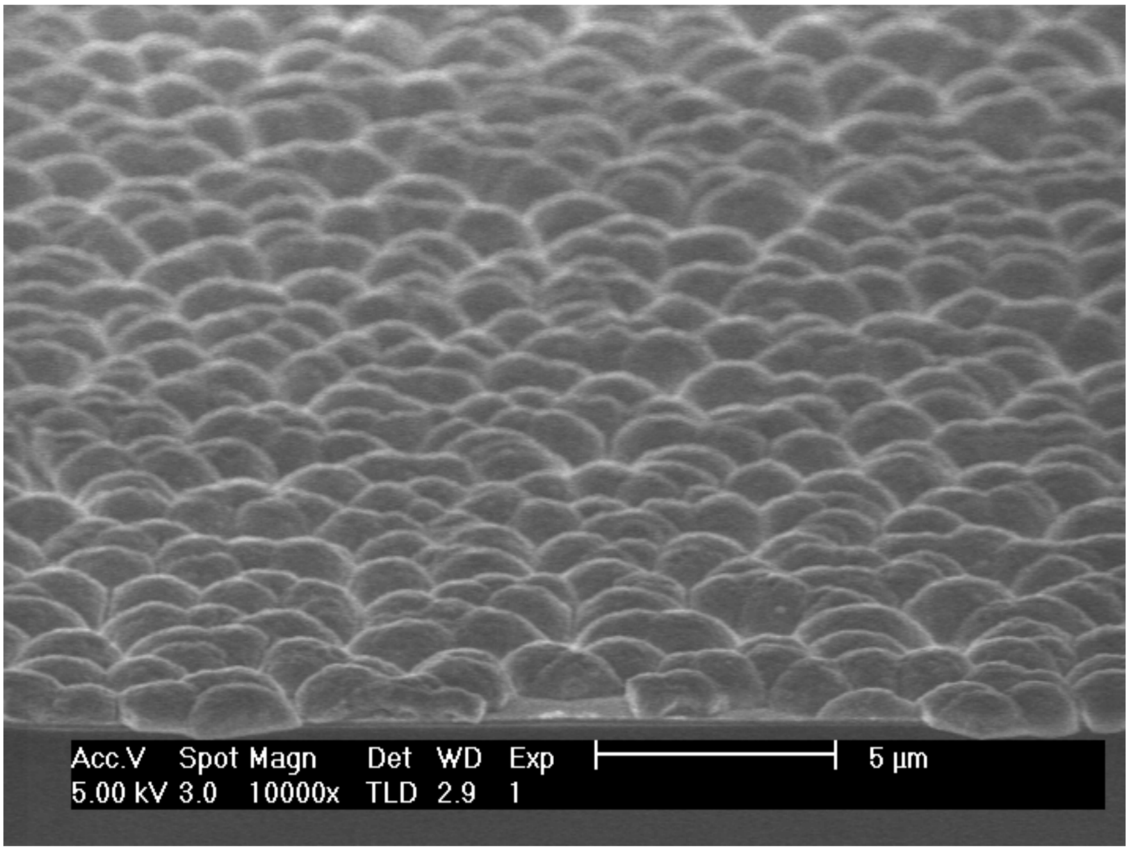
Acc.V Spot Magn Det WD Exp
5.00 kV 3.0 10000x TLD 2.9 1
5 µm

FIG 11

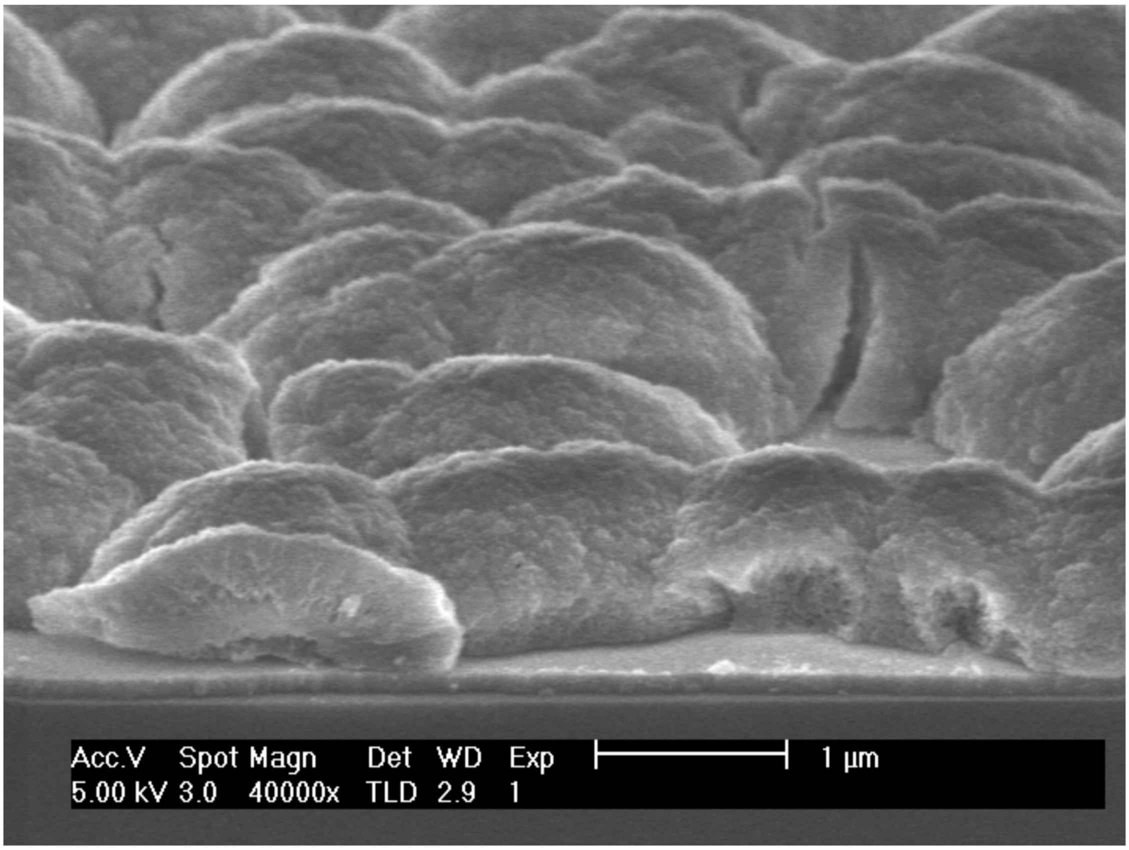
Acc.V Spot Magn Det WD Exp
5.00 kV 3.0 40000x TLD 2.9 1
1 µm

FIG 12

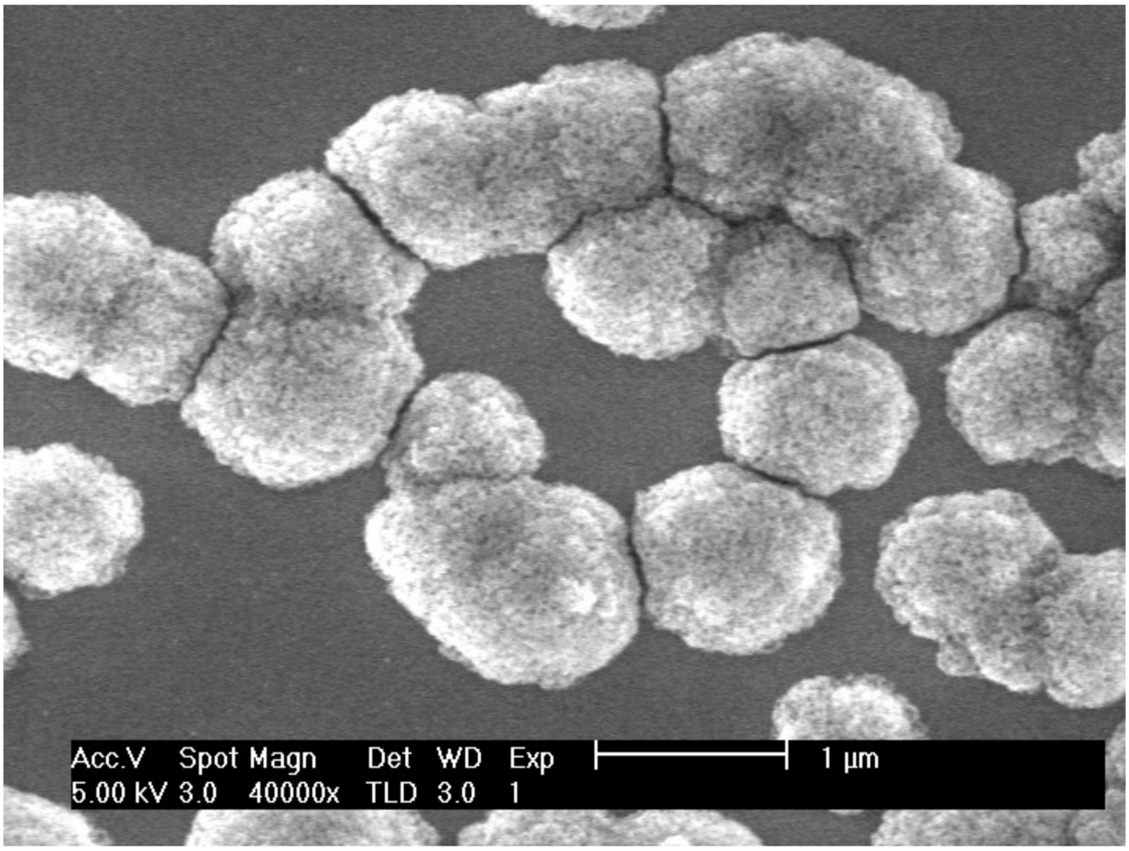
Acc.V Spot Magn Det WD Exp
5.00 kV 3.0 40000x TLD 3.0 1
1 µm

FIG 13

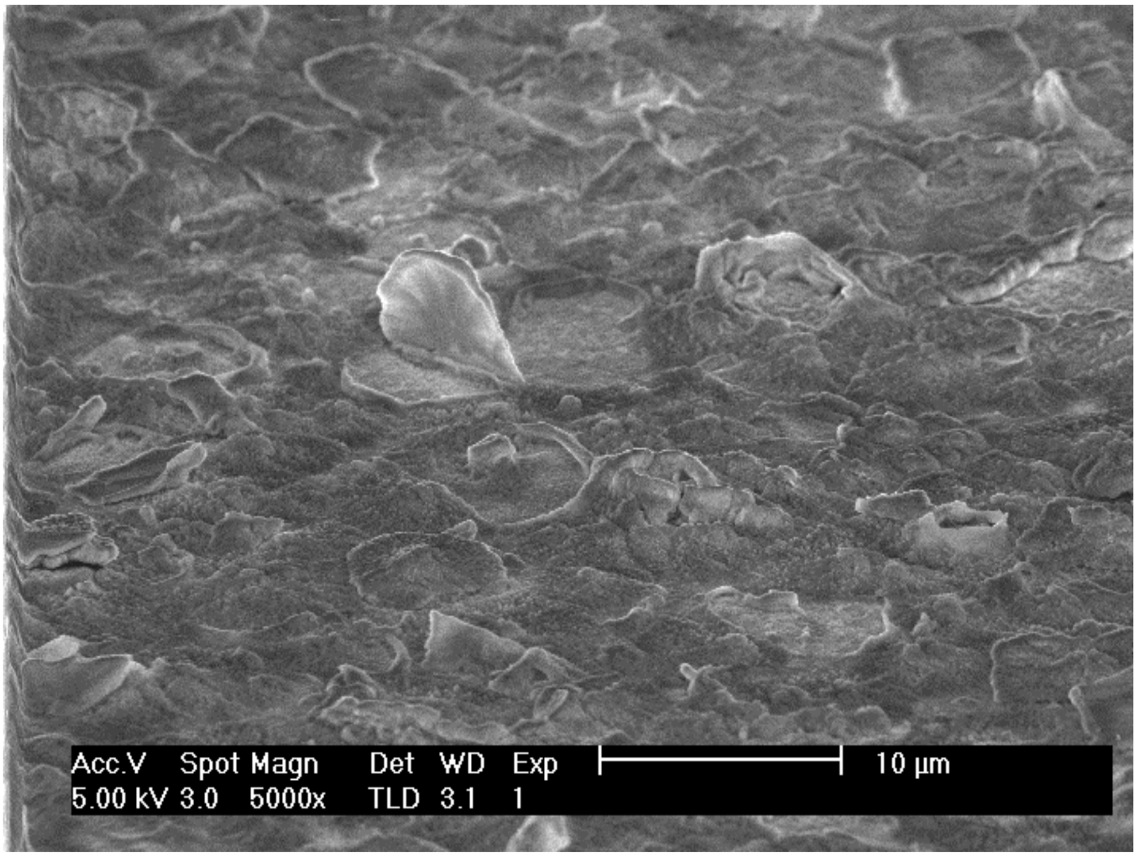
Acc.V Spot Magn Det WD Exp
5.00 kV 3.0 5000x TLD 3.1 1
10 µm

FIG 14

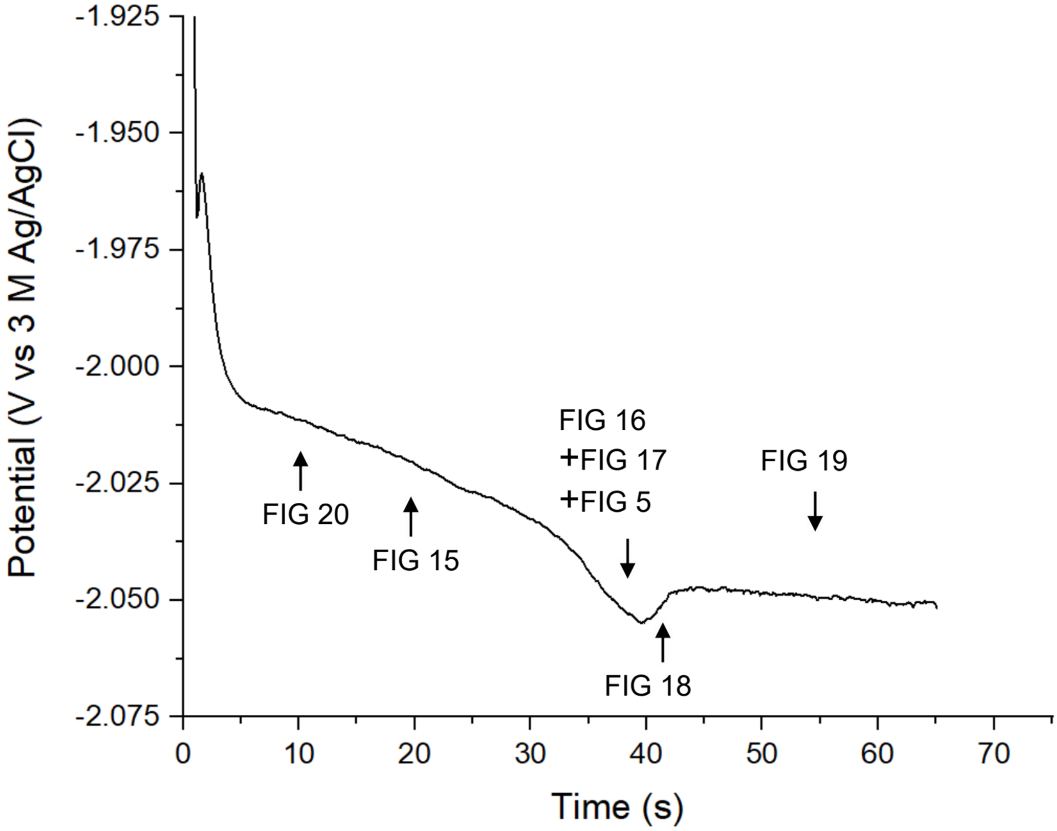
Potential (V vs 3 M Ag/AgCl)
-1.925
-1.950
-1.975
-2.000
-2.025
-2.050
-2.075
0
10
20
30
40
50
60
70
Time (s)
FIG 20
FIG 15
FIG 16
+FIG 17
+FIG 5
FIG 18
FIG 19

FIG 15

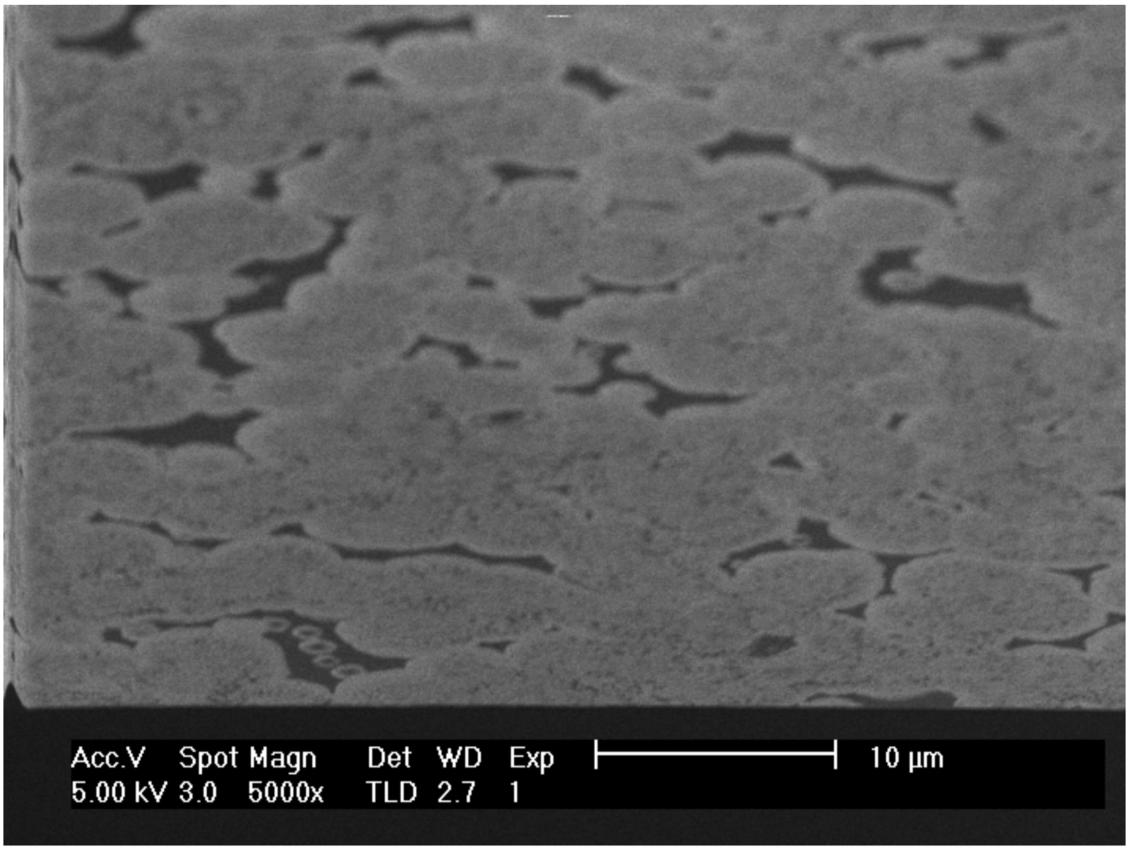
Acc.V Spot Magn Det WD Exp
5.00 kV 3.0 5000x TLD 2.7 1
10 µm

FIG 16

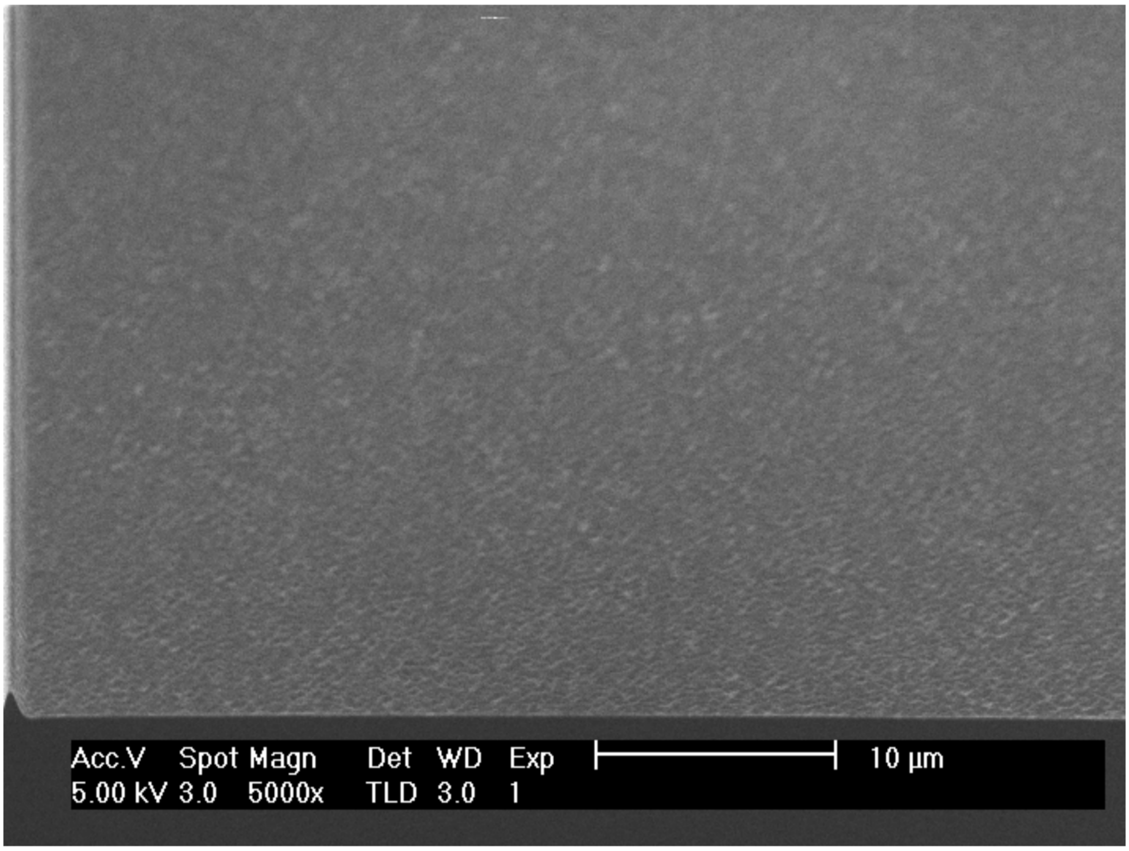
Acc.V Spot Magn Det WD Exp
5.00 kV 3.0 5000x TLD 3.0 1
10 µm

FIG 17

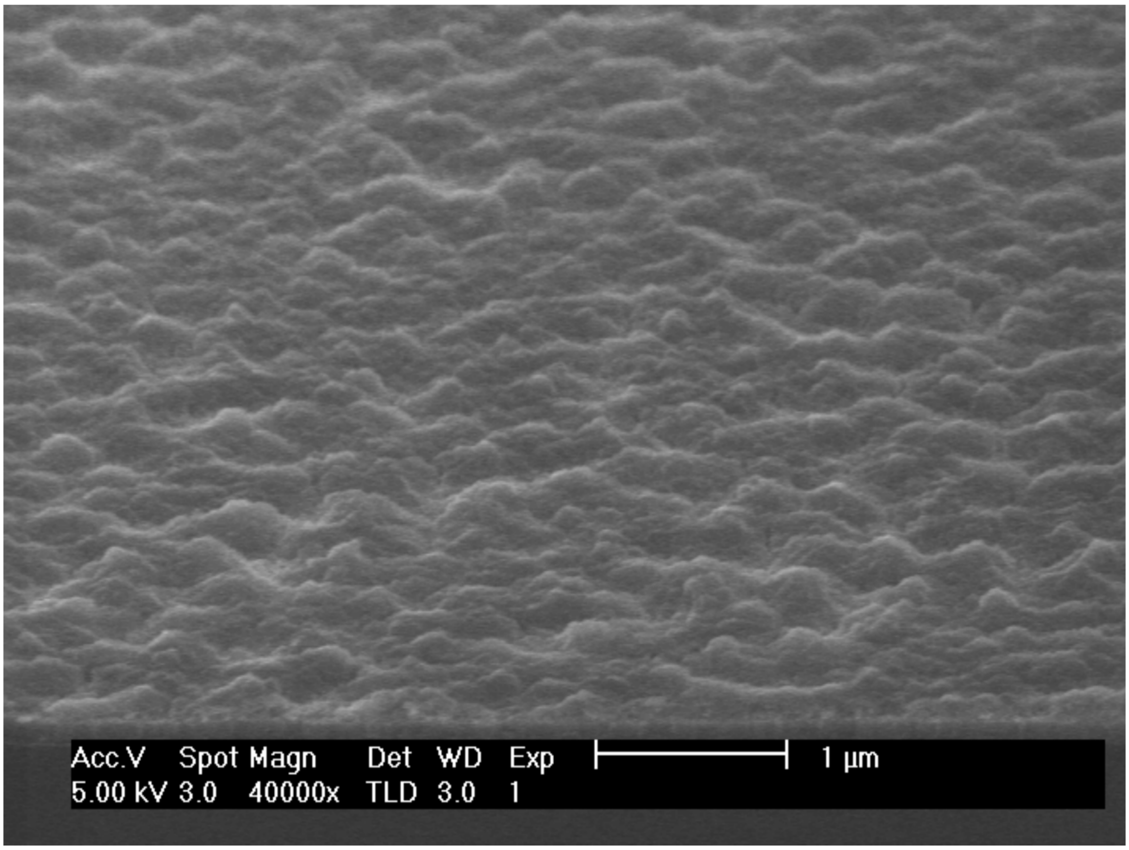
Acc.V Spot Magn Det WD Exp
5.00 kV 3.0 40000x TLD 3.0 1
1 µm

FIG 18

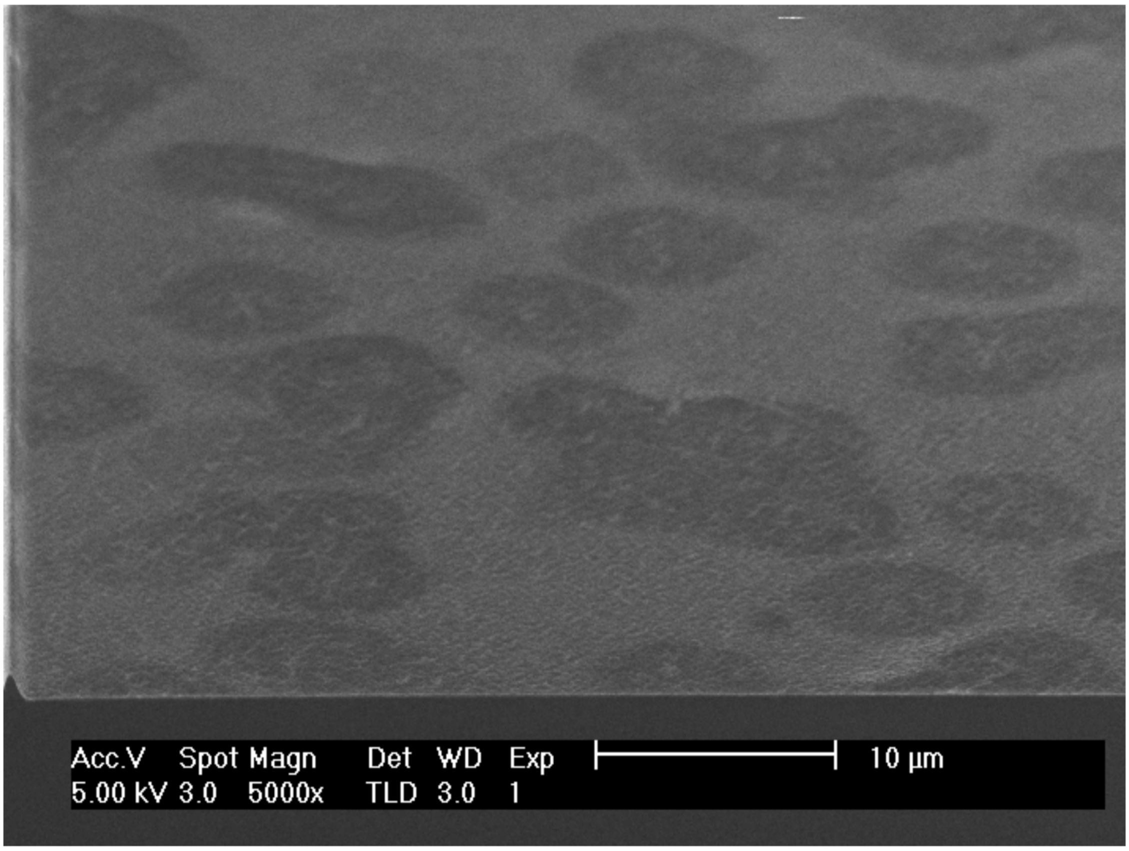
Acc.V Spot Magn Det WD Exp
5.00 kV 3.0 5000x TLD 3.0 1
10 µm

FIG 19

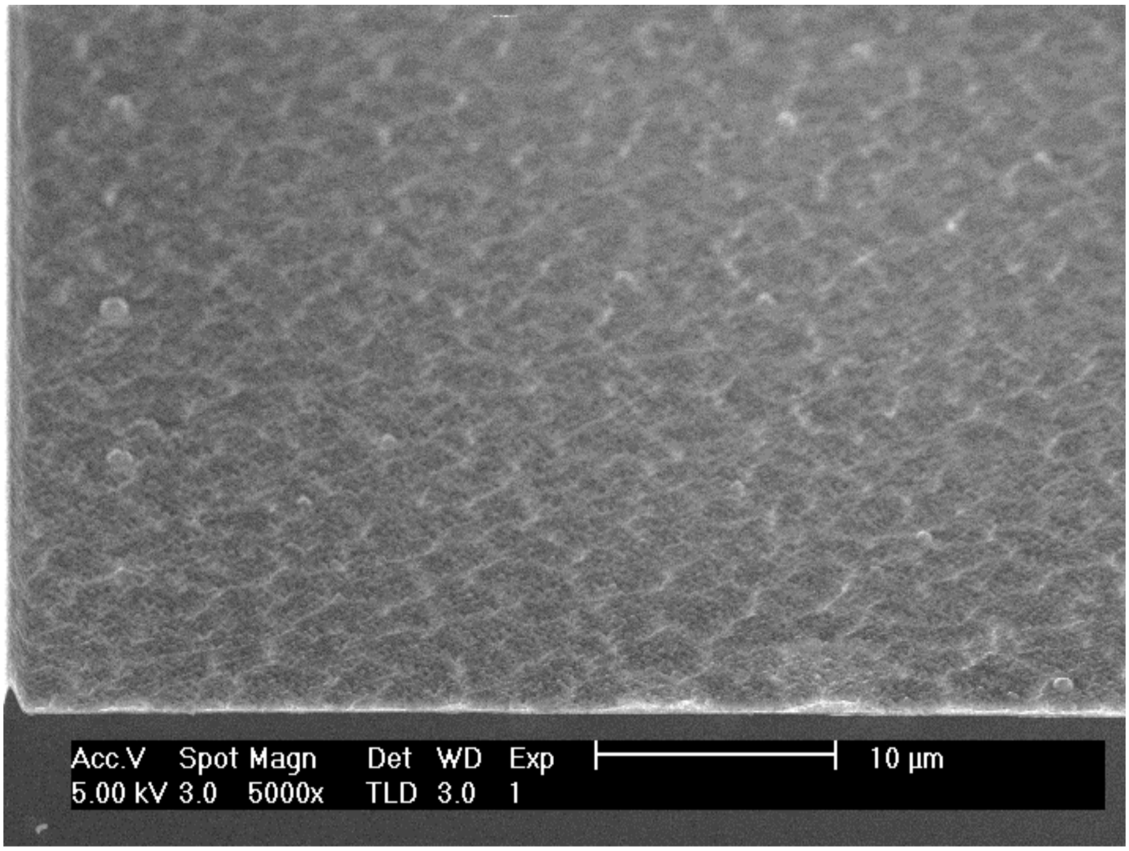
Acc.V Spot Magn Det WD Exp
10 µm
5.00 kV 3.0 5000x TLD 3.0 1

FIG 20

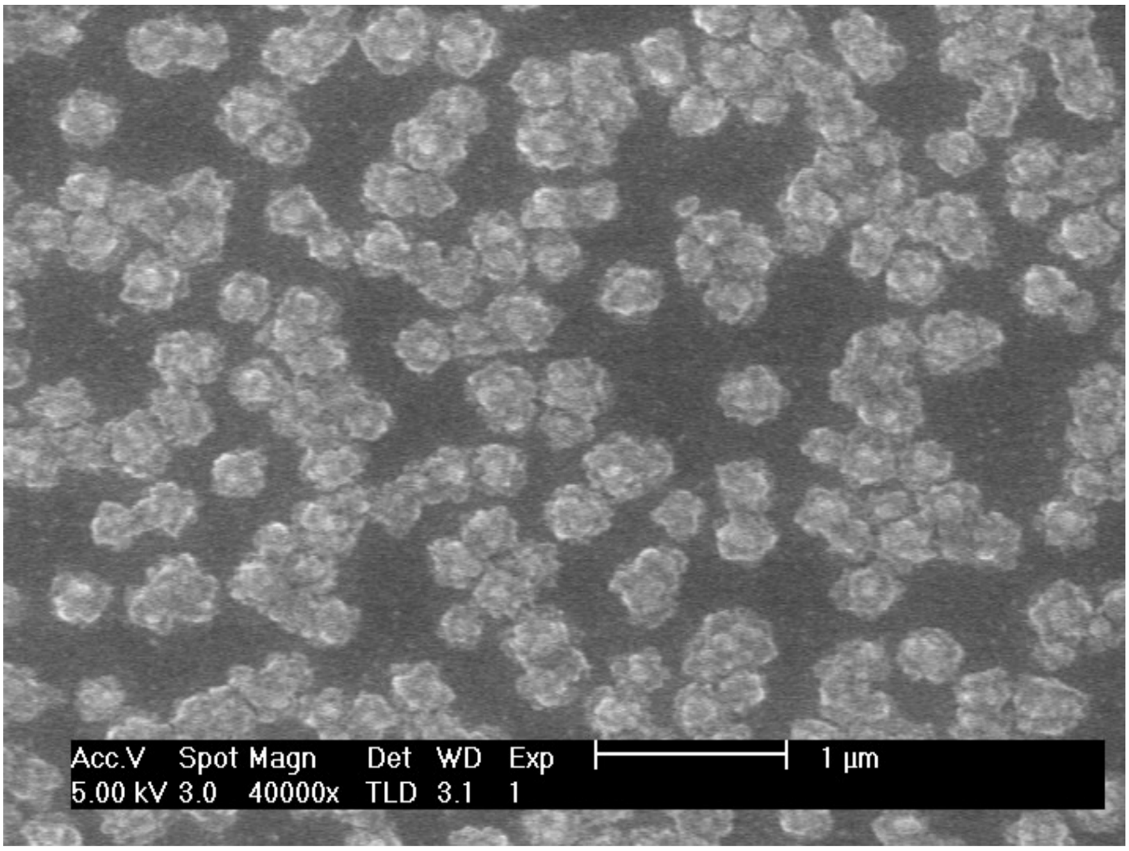
Acc.V Spot Magn Det WD Exp
1 µm
5.00 kV 3.0 40000x TLD 3.1 1

FIG 21

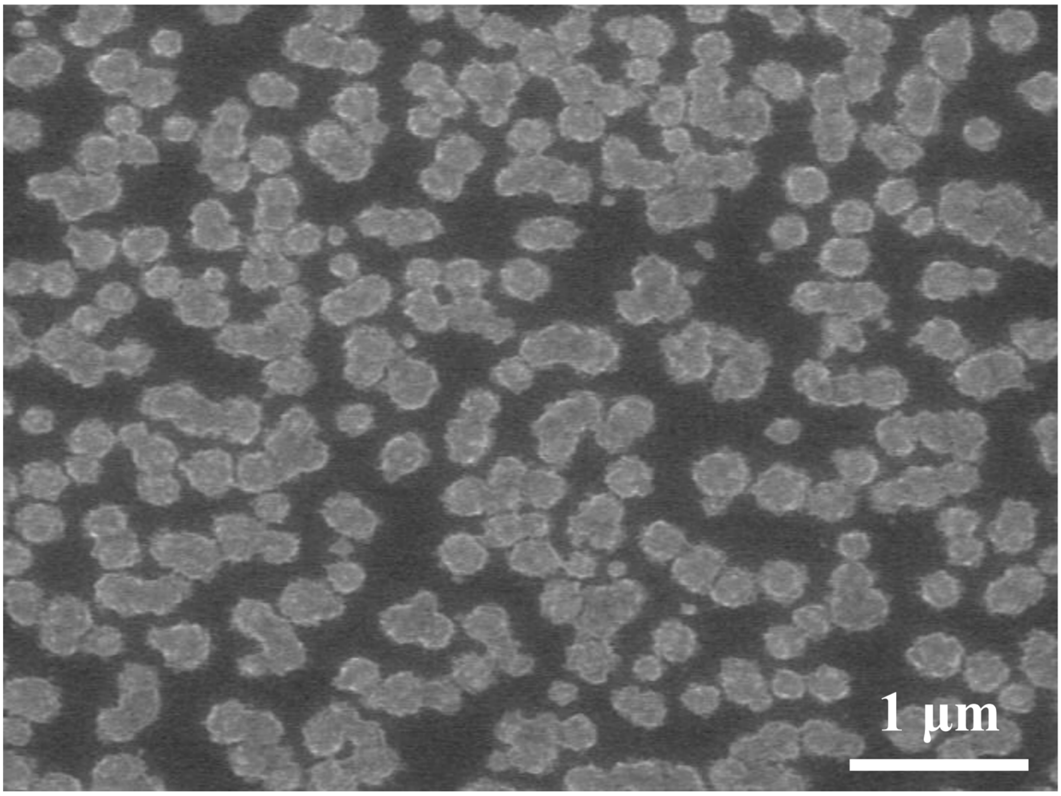


FIG 22

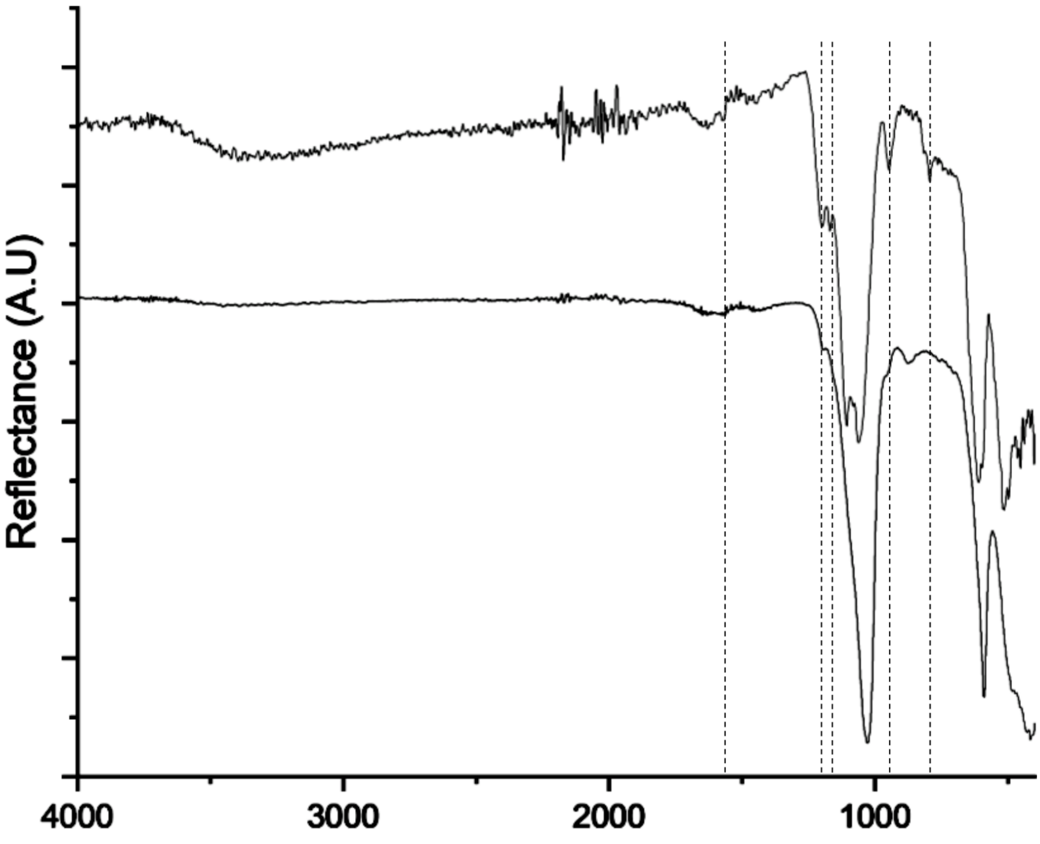

FIG 23

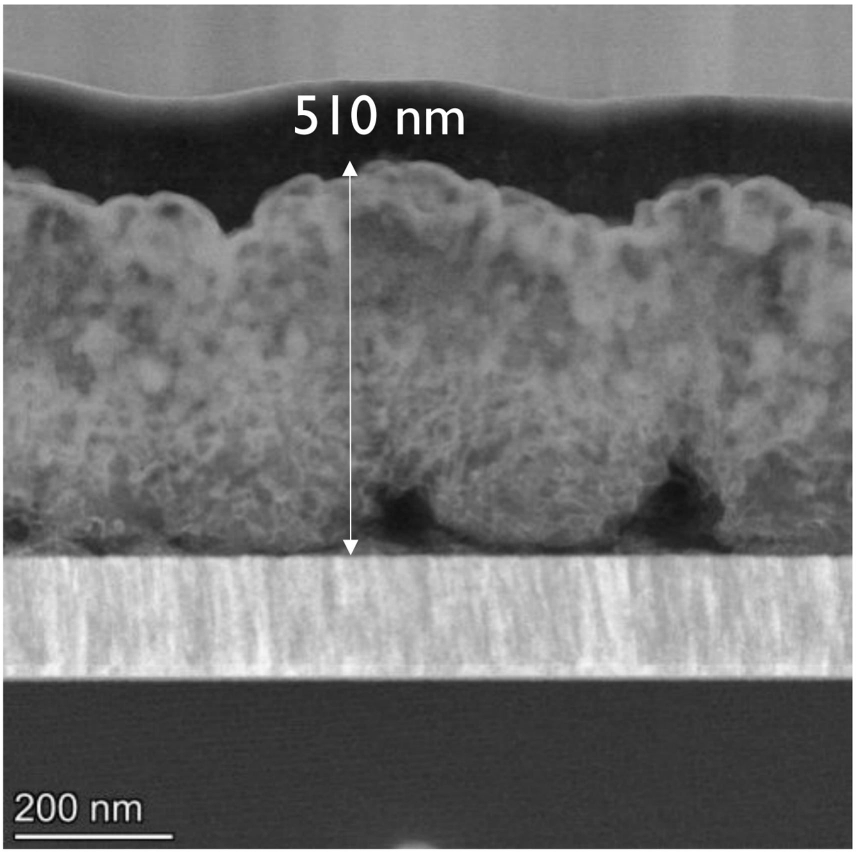


FIG 24

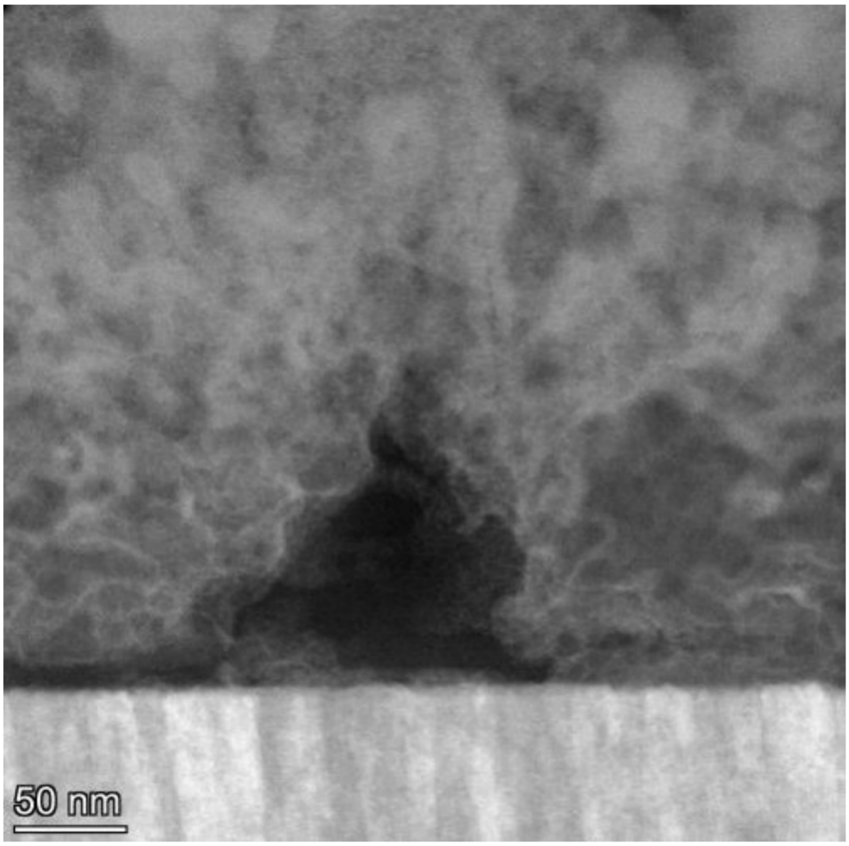

FIG 25

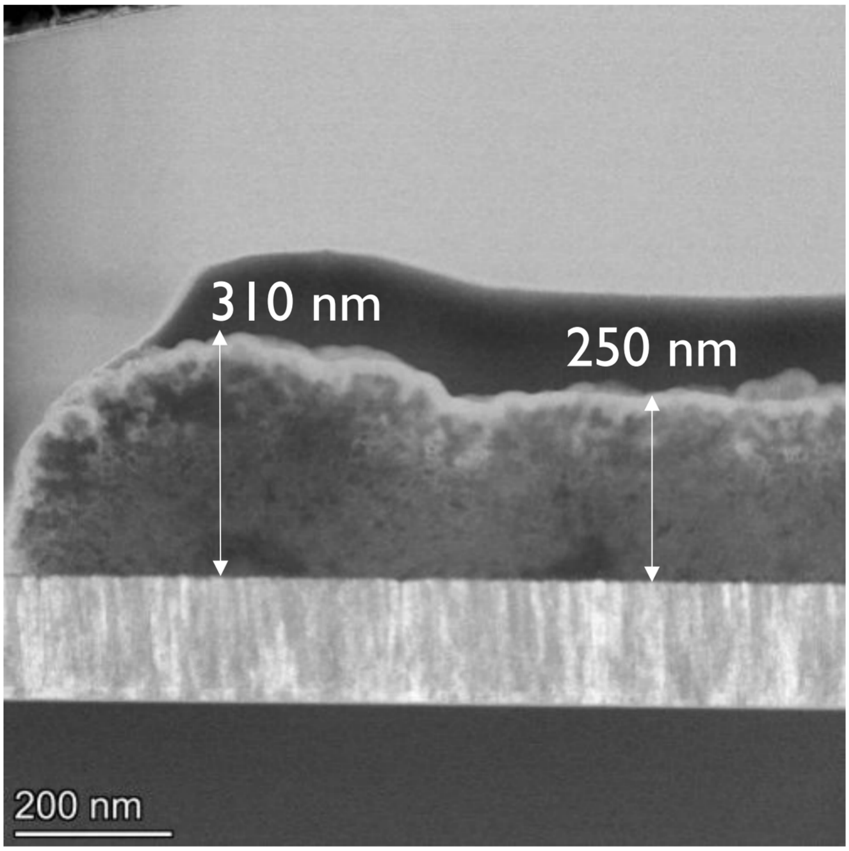


FIG 26

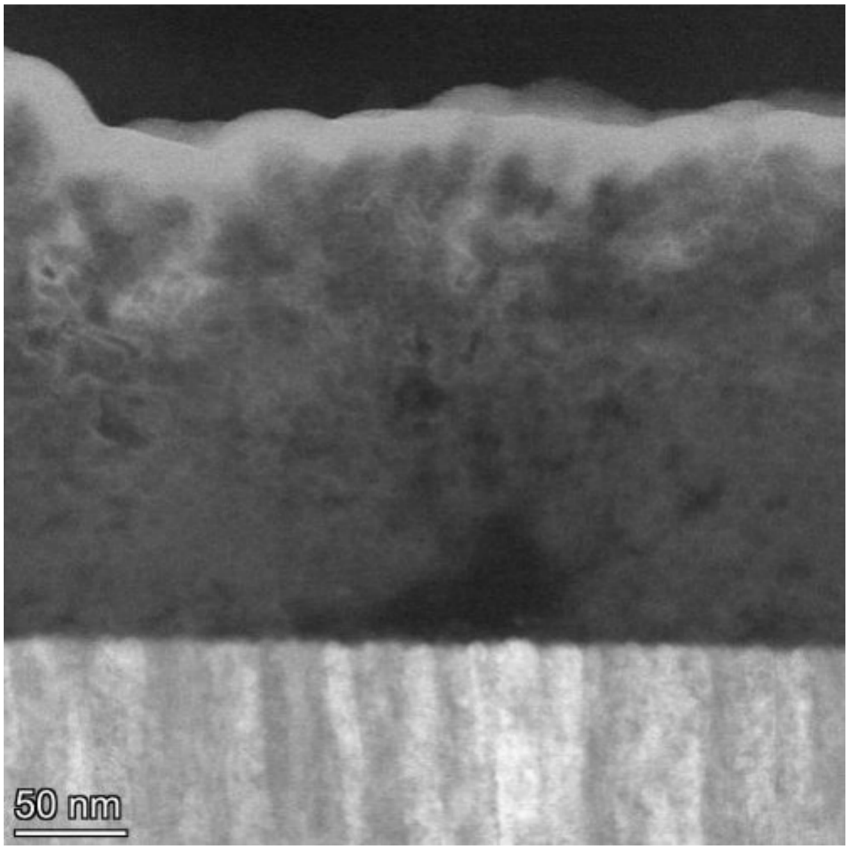

Europäisches Patentamt
European Patent Office
Office européen des brevets

# EUROPEAN SEARCH REPORT

Application Number
EP 25 20 6641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | LÓPEZ MARÍA C. ET AL: "Improving the Performance of Titania Nanotube Battery Materials by Surface Modification with Lithium Phosphate", APPLIED MATERIALS & INTERFACES, vol. 6, no. 8, 11 April 2014 (2014-04-11), pages 5669-5678, XP093260460, US ISSN: 1944-8244, DOI: 10.1021/am500189h * Section Experimental Materials and Methods * ----- | 1-15 | INV. C25D9/08 |
| A | DREVET RICHARD ET AL: "Electrodeposition of Calcium Phosphate Coatings on Metallic Substrates for Bone Implant Applications: A Review", COATINGS, vol. 12, no. 4, 17 April 2022 (2022-04-17), page 539, XP093260448, CH ISSN: 2079-6412, DOI: 10.3390/coatings12040539 * Section 2. Electrodeposition of Calcium Phosphate Coatings * ----- | 1-15 | TECHNICAL FIELDS SEARCHED (IPC): C25D |
| A | SASSONI ENRICO ET AL: "Electrodeposition of Hydroxyapatite Coatings for Marble Protection: Preliminary Results", COATINGS, vol. 9, no. 3, 23 March 2019 (2019-03-23), page 207, XP093344752, CH ISSN: 2079-6412, DOI: 10.3390/coatings9030207 Retrieved from the Internet: URL:https://files.core.ac.uk/download/pdf/304118036.pdf> * the whole document * ----- -/-- | 7-9 | |

1

The present search report has been drawn up for all claims

| Place of search | Date of completion of the search | Examiner |
|---|---|---|
| The Hague | 11 December 2025 | Le Hervet, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 20 6641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SASSONI ENRICO ET AL: "Calcium phosphate coatings for marble conservation: Influence of ethanol and isopropanol addition to the precipitation medium on the coating microstructure and performance", CORROSION SCIENCE, vol. 136, 1 May 2018 (2018-05-01), pages 255-267, XP093344664, GB ISSN: 0010-938X, DOI: 10.1016/j.corsci.2018.03.019 Retrieved from the Internet: URL:https://pdf.sciencedirectassets.com/271639/1-s2.0-S0010938X18X00067/1-s2.0-S0010938X17319054/main.pdf?hash=13f55a51cc9b8e9c65d44406b9b4f7f1e13f9de16cb78d17b2a3108238f5ac8c&host=68042c943591013ac2b2430a89b270f6af2c76d8dfd086a07176afe7c76c2c61&pii=S0010938X17319054&tid=spdf-d5a092e8-7f64-42db-a6e8-ff9><br>* the whole document *<br>----- | 7-9 | |
| A | KANNAN M. BOBBY ET AL: "Electrochemical surface engineering of magnesium metal by plasma electrolytic oxidation and calcium phosphate deposition: biocompatibility and in vitro degradation studies", RSC ADVANCES, vol. 8, no. 51, 1 January 2018 (2018-01-01), pages 29189-29200, XP093344729, GB ISSN: 2046-2069, DOI: 10.1039/C8RA05278F Retrieved from the Internet: URL:https://pubs.rsc.org/en/content/articlepdf/2018/ra/c8ra05278f><br>* the whole document *<br>----- | 7-9 | TECHNICAL FIELDS SEARCHED (IPC) |

The present search report has been drawn up for all claims

1

| Place of search | Date of completion of the search | Examiner |
|---|---|---|
| The Hague | 11 December 2025 | Le Hervet, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LIU, H. C** ; **YEN, S. K**. Electrolytic Li3PO4 coating on Pt. *Journal of power sources*, 2006, vol. 159 (1), 245-248
- **LOPEZ, MARIA C et al.** Improving the performance of titania nanotube battery materials by surface modification with lithium phosphate. *ACS Applied Materials & Interfaces*, 2014, vol. 6 (8), 5669-5678
- Lange's Handbook of Chemistry. McGraw-Hill Education, 2017
- **HARLE, HEATHER D et al.** A simple method for determination of solubility in the first-year laboratory. *Journal of chemical education*, 2003, vol. 80 (5), 560